(19) Europäisches Patentamt
European Patent Office
Office européen des brevets

(11) EP 2 668 976 B1

(12) **EUROPEAN PATENT SPECIFICATION**

(45) Date of publication and mention of the grant of the patent:
**24.08.2016 Bulletin 2016/34**

(51) Int Cl.:
***A63B 37/00*** *(2006.01)* ***C08K 5/00*** *(2006.01)*
***C08K 5/098*** *(2006.01)*

(21) Application number: **13164429.6**

(22) Date of filing: **19.04.2013**

(54) **Golf ball**

Golfball

Balle de golf

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2012 JP 2012124406**

(43) Date of publication of application:
**04.12.2013 Bulletin 2013/49**

(73) Proprietor: **Dunlop Sports Co., Ltd.**
**Hyogo 651-0072 (JP)**

(72) Inventors:
- **Tachibana, Kosuke**
**Kobe-shi,, Hyogo 651-0072 (JP)**
- **Isogawa, Kazuhiko**
**Kobe-shi,, Hyogo 651-0072 (JP)**

(74) Representative: **Manitz, Finsterwald & Partner GbR**
**Martin-Greif-Strasse 1**
**80336 München (DE)**

(56) References cited:
**EP-A2- 1 068 883**
**EP-A2- 2 537 888**
**US-A1- 2010 035 704**
**US-A1- 2010 069 174**
**US-A1- 2011 300 968**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 668 976 B1

## Description

This application claims priority on Patent Application No. 2012-124406 filed in JAPAN on May 31, 2012. The entire contents of this Japanese Patent Application are hereby incorporated by reference.

BACKGROUND OF THE INVENTION

Field of the Invention

The present invention relates to golf balls. Specifically, the present invention relates to golf balls that include a core having a three-layer structure, a mid layer, and a cover.

Description of the Related Art

Golf players' foremost requirement for golf balls is flight performance. In particular, golf players place importance on flight performance upon a shot with a driver. Flight performance correlates with the resilience performance of a golf ball. When a golf ball having excellent resilience performance is hit, the golf ball flies at a high speed, thereby achieving a large flight distance. Golf balls that include a core having excellent resilience performance are disclosed in JP61-37178, JP2008-212681 (US2008/0214324), JP2008-523952 (US2006/0135287 and US2007/0173607), and JP2009-119256 (US2009/0124757).

The core disclosed in JP61-37178 is obtained from a rubber composition that includes a co-crosslinking agent and a crosslinking activator. This publication discloses palmitic acid, stearic acid, and myristic acid as the crosslinking activator.

The core disclosed in JP2008-212681 is obtained from a rubber composition that includes an organic peroxide, a metal salt of an $\alpha,\beta$-unsaturated carboxylic acid, and a copper salt of a fatty acid.

The core disclosed in JP2008-523952 is obtained from a rubber composition that includes a metal salt of an unsaturated monocarboxylic acid, a free radical initiator, and a non-conjugated diene monomer.

The core disclosed in JP2009-119256 is obtained from a rubber composition that includes a polybutadiene whose vinyl content is equal to or less than 2%, whose cis 1,4-bond content is equal to or greater than 80%, and which has an active end modified with an alkoxysilane compound.

An appropriate trajectory height is required in order to achieve a large flight distance. A trajectory height depends on a spin rate and a launch angle. With a golf ball that achieves a high trajectory by a high spin rate, a flight distance is insufficient. With a golf ball that achieves a high trajectory by a high launch angle, a large flight distance is obtained. Use of an outer-hard/inner-soft structure in a golf ball can achieve a low spin rate and a high launch angle. Modifications regarding a hardness distribution of a core are disclosed in JP6-154357 (USP5,403,010), JP2008-194471 (USP7,344,455, US2008/0194358, US2008/0194359, and US2008/0214325), and JP2008-194473 (US2008/0194357 and US2008/0312008).

In the core disclosed in JP6-154357, a JIS-C hardness H1 at the central point of the core is 58 to 73, a JIS-C hardness H2 in a region that extends over a distance range from equal to or greater than 5 mm to equal to or less than 10 mm from the central point is equal to or greater than 65 but equal to or less than 75, a JIS-C hardness H3 at a point located at a distance of 15 mm from the central point is equal to or greater than 74 but equal to or less than 82, and a JIS-C hardness H4 at the surface of the core is equal to or greater than 76 but equal to or less than 84. The hardness H2 is greater than the hardness H1, the hardness H3 is greater than the hardness H2, and the hardness H4 is equal to or greater than the hardness H3.

In the core disclosed in JP2008-194471, a Shore D hardness at the central point of the core is equal to or greater than 30 but equal to or less than 48, a Shore D hardness at a point located at a distance of 4 mm from the central point is equal to or greater than 34 but equal to or less than 52, a Shore D hardness at a point located at a distance of 8 mm from the central point is equal to or greater than 40 but equal to or less than 58, a Shore D hardness at a point located at a distance of 12 mm from the central point is equal to or greater than 43 but equal to or less than 61, a Shore D hardness in a region that extends over a distance range from equal to or greater than 2 mm to equal to or less than 3 mm from the surface of the core is equal to or greater than 36 but equal to or less than 54, and a Shore D hardness at the surface is equal to or greater than 41 but equal to or less than 59.

In the core disclosed in JP2008-194473, a Shore D hardness at the central point of the core is equal to or greater than 25 but equal to or less than 45, a Shore D hardness in a region that extends over a distance range from equal to or greater than 5 mm to equal to or less than 10 mm from the central point is equal to or greater than 39 but equal to or less than 58, a Shore D hardness at a point located at a distance of 15 mm from the central point is equal to or greater than 36 but equal to or less than 55, and a Shore D hardness at the surface of the core is equal to or greater than 55 but equal to or less than 75.

JP2010-253268 (US2010/0273575) discloses a golf ball that includes a core, an envelope layer, a mid layer, and a cover. In the core, the hardness gradually increases from the central point of the core to the surface of the core. The difference between a JIS-C hardness at the surface and a JIS-C hardness at the central point is equal to or greater than 15. The hardness of the cover is greater than the hardness of the mid layer, and the hardness of the mid layer is greater than the hardness of the envelope layer.

EP 2 537 888 A2, which is a prior art document according to Article 54 (3) EPC, discloses a golf ball comprising a spherical core and at least one cover, wherein the core is formed from a rubber composition, which includes a base rubber, an $\alpha$,ß-unsaturated carboxylic acid having 3 to 8 carbon atoms and/or a metal salt thereof as a co-crosslinking agent, a crosslinking initiator, a salt of a carboxylic acid having 1 to 13 carbon atoms and a metal compound in the case of containing only the $\alpha$,ß-unsaturated carboxylic acid having 3 to 8 carbon atoms as the co-crosslinking agent.

EP 1 068 883 A2 discloses golf balls based on a core and an enclosure of one or more layers enclosing the core, wherein at least one enclosure layer is formed by subjecting to crosslinking reaction a rubber composition comprising (1) a base rubber , (2) an alpha,beta-unsaturated carboxylic acid , (3) a metal oxide and (4) a polymerization initiator.

Golf players also place importance on spin performance of golf balls. When a backspin rate is high, the run is short. It is easy for golf players to cause a golf ball, to which backspin is easily provided, to stop at a target point. When a sidespin rate is high, the golf ball tends to curve. It is easy for golf players to intentionally cause a golf ball, to which sidespin is easily provided, to curve. A golf ball to which spin is easily provided has excellent controllability. In particular, advanced golf players place importance on controllability upon a shot with a short iron.

Golf players' requirements for flight distance have been escalated more than ever. An object of the present invention is to provide a golf ball having excellent flight performance.

## SUMMARY OF THE INVENTION

A golf ball according to the present invention includes a core, a mid layer positioned outside the core, and a cover positioned outside the mid layer. The core includes a center, a first envelope layer positioned outside the center, and a second envelope layer positioned outside the first envelope layer. The first envelope layer is formed by a first rubber composition being crosslinked. The second envelope layer is formed by a second rubber composition being crosslinked. The first rubber composition and/or the second rubber composition include:

(a) a base rubber;
(b) a co-crosslinking agent;
(c) a crosslinking initiator; and
(d) an acid and/or a salt.

The co-crosslinking agent (b) is:

(b-1) an $\alpha,\beta$-unsaturated carboxylic acid having 3 to 8 carbon atoms; and/or
(b-2) a metal salt of an $\alpha,\beta$-unsaturated carboxylic acid having 3 to 8 carbon atoms

and the JIS-C hardness H(100) at a surface of the core is greater than the JIS-C hardness H(75) at a point whose ratio of a distance from a central point of the core to a radius of the core is 75%.

Preferably, an amount of the acid and/or the salt (d) is equal to or greater than 0.5 parts by weight but equal to or less than 45 parts by weight, per 100 parts by weight of the base rubber (a).

Preferably, the acid and/or the salt (d) is a carboxylic acid and/or a salt thereof (d-1).

Preferably, a carbon number of a carboxylic acid component of the carboxylic acid and/or the salt thereof (d-1) is equal to or greater than 1 but equal to or less than 30. Preferably, the carboxylic acid and/or the salt thereof (d-1) is a fatty acid and/or a salt thereof. Preferably, the carboxylic acid and/or the salt thereof (d-1) is a zinc salt of a carboxylic acid. Preferable examples of the zinc salt of the carboxylic acid include zinc octoate, zinc laurate, zinc myristate, and zinc stearate.

Preferably, the first rubber composition and/or the second rubber composition further include an organic sulfur compound (e). Preferable examples of the organic sulfur compound (e) include thiophenols, diphenyl disulfides, thionaphthols, thiuram disulfides, and metal salts thereof. Preferable examples of the organic sulfur compound (e) include 2-thionaphthol, bis(pentabromophenyl)disulfide, and 2,6-dichlorothiophenol. Preferably, an amount of the organic sulfur compound (e) is equal to or greater than 0.05 parts by weight but equal to or less than 5.0 parts by weight, per 100 parts by weight of the base rubber (a).

Preferably, an amount of the co-crosslinking agent (b) is equal to or greater than 15 parts by weight but equal to or less than 50 parts by weight, per 100 parts by weight of the base rubber(a). Preferably, an amount of the crosslinking initiator (c) is equal to or greater than 0.2 parts by weight but equal to or less than 5.0 parts by weight, per 100 parts by

weight of the base rubber (a).

Preferably, the first rubber composition and/or the second rubber composition include the α,β-unsaturated carboxylic acid (b-1). The first rubber composition and/or the second rubber composition further include a metal compound (f).

Preferably, a JIS-C hardness H(0) at a central point of the core is equal to or greater than 40 but equal to or less than 70, and a JIS-C hardness H(100) at a surface of the core is equal to or greater than 78 but equal to or less than 96.

Preferably, a difference (H(100)-H(0)) between the hardness H(100) and the hardness H(0) is equal to or greater than 15.

Preferably, a Shore D hardness Hm of the mid layer is greater than a Shore D hardness Hc of the cover. More preferably, a difference (Hm-Hc) between the hardness Hm and the hardness Hc is equal to or greater than 18.

Preferably, a JIS-C hardness H(39) at a point whose ratio of a distance from a central point of the core to a radius of the core is 39% is greater than a JIS-C hardness H(36) at a point whose ratio of a distance from the central point of the core to the radius of the core is 36%. Preferably, a JIS-C hardness H (76) at a point whose ratio of a distance from a central point of the core to a radius of the core is 76% is greater than a JIS-C hardness H(75) at a point whose ratio of a distance from the central point of the core to the radius of the core is 75%.

According to the present invention, the JIS-C hardness H (100) at a surface of the core is greater than the JIS-C hardness H (75) at a point whose ratio of a distance from a central point of the core to a radius of the core is 75%. More preferably, a difference (H(100)-H(75)) between the hardness H(100) and the hardness H(75) is equal to or greater than 4.

Preferably, the mid layer may be formed from a resin composition, and the cover may be formed from a resin composition whose base resin is different from a base resin of the mid layer. Preferably, the golf ball further includes a reinforcing layer between the mid layer and the cover.

Preferably, a diameter of the center is equal to or greater than 10 mm but equal to or less than 20 mm.

In the golf ball according to the present invention, a hardness distribution is appropriate. In the golf ball, the energy loss is low when the golf ball is hit. When the golf ball is hit with a driver, the spin rate is low. The low spin rate achieves a large flight distance.

## BRIEF DESCRIPTION OF THE DRAWINGS

FIG. 1 is a partially cutaway cross-sectional view of a golf ball according to one embodiment of the present invention;
FIG. 2 is a line graph showing a hardness distribution of a first envelope layer of the golf ball in FIG. 1; and
FIG. 3 is a line graph showing a hardness distribution of a second envelope layer of the golf ball in FIG. 1.

## DESCRIPTION OF THE PREFERRED EMBODIMENTS

The following will describe in detail the present invention, based on preferred embodiments with reference to the accompanying drawings.

A golf ball 2 shown in FIG. 1 includes a spherical core 4, a mid layer 6 positioned outside the core 4, a reinforcing layer 8 positioned outside the mid layer 6, and a cover 10 positioned outside the reinforcing layer 8. On the surface of the cover 10, a large number of dimples 12 are formed. Of the surface of the golf ball 2, a part other than the dimples 12 is a land 14. The golf ball 2 includes a paint layer and a mark layer on the external side of the cover 10, but these layers are not shown in the drawing.

The golf ball 2 has a diameter of 40 mm or greater but 45 mm or less. From the standpoint of conformity to the rules established by the United States Golf Association (USGA), the diameter is preferably equal to or greater than 42.67 mm. In light of suppression of air resistance, the diameter is preferably equal to or less than 44 mm and more preferably equal to or less than 42.80 mm. The golf ball 2 has a weight of 40 g or greater but 50 g or less. In light of attainment of great inertia, the weight is preferably equal to or greater than 44 g and more preferably equal to or greater than 45.00 g. From the standpoint of conformity to the rules established by the USGA, the weight is preferably equal to or less than 45.93 g.

The core 4 preferably has a diameter of 35.0 mm or greater but 42.0 mm or less. The core 4 having a diameter of 35.0 mm or greater can achieve excellent resilience performance of the golf ball 2. In this respect, the diameter is more preferably equal to or greater than 37.0 mm and particularly preferably equal to or greater than 38.0 mm. In the golf ball 2 that includes the core 4 having a diameter of 42.0 mm or less, the mid layer 6 and the cover 10 can have sufficient thicknesses. The golf ball 2 that includes the mid layer 6 and the cover 10 which have large thicknesses has excellent durability. In this respect, the diameter is more preferably equal to or less than 41.0 mm and particularly preferably equal to or less than 40.0 mm.

In the golf ball 2, the core 4 includes a spherical center 16, a first envelope layer 18, and a second envelope layer 20. The first envelope layer 18 is positioned outside the center 16. The second envelope layer 20 is positioned outside the first envelope layer 18.

In the golf ball 2, the center 16 is more flexible than the first envelope layer 18 and the second envelope layer 20. The center 16 can suppress spin. The center 16 preferably has a diameter of 10 mm or greater but 20 mm or less. In the golf ball 2 that includes the center 16 having a diameter of 10 mm orgreater, spin can be suppressed. In this respect, the diameter is more preferably equal to or greater than 12 mm and particularly preferably equal to or greater than 14 mm. The golf ball 2 that includes the center 16 having a diameter of 20 mm or less has excellent resilience performance. In this respect, the diameter is more preferably equal to or less than 18 mm and particularly preferably equal to or less than 16 mm.

In the golf ball 2, the ratio of the radius of the center 16 to the radius of the core 4 is preferably less than 39%. The golf ball 2 has excellent resilience performance. In this respect, the ratio is more preferably equal to or less than 38%. The ratio is preferably equal to or greater than 20%. Thus, the center 16 can effectively contribute to suppression of spin. In this respect, the ratio is more preferably equal to or greater than 25%. When the golf ball 2 is hit with a driver, the flight distance is large.

The first envelope layer 18 is harder than the center 16. When the golf ball 2 is hit with a driver, the energy loss is low in the first envelope layer 18. The first envelope layer 18 can contribute to the resilience performance of the golf ball 2. When the golf ball 2 is hit with a driver, the flight distance is large.

The second envelope layer 20 is harder than the first envelope layer 18. When the golf ball 2 is hit with a driver, the energy loss is low in the second envelope layer 20. The second envelope layer 20 can contribute to the resilience performance of the golf ball 2. When the golf ball 2 is hit with a driver, the flight distance is large.

The first envelope layer 18 preferably has a thickness of 3 mm or greater but 10 mm or less. In the golf ball 2 that includes the first envelope layer 18 having a thickness of 3 mm or greater, the spin suppression effect is great. In this respect, the thickness is more preferably equal to or greater than 4 mm. The golf ball 2 that includes the first envelope layer 18 having a thickness of 10 mm or less has excellent resilience performance. In this respect, the thickness is more preferably equal to or less than 9 mm.

The second envelope layer 20 preferably has a thickness of 2.5 mm or greater but 10 mm or less. In the golf ball 2 that includes the second envelope layer 20 having a thickness of 2.5 mm or greater has excellent durability. In this respect, the thickness is more preferably equal to or greater than 3.5 mm. The golf ball 2 that includes the second envelope layer 20 having a thickness of 10 mm or less has excellent resilience performance. In this respect, the thickness is more preferably equal to or less than 9 mm.

In the golf ball 2, the ratio of the radius of a sphere consisting of the center 16 and the first envelope layer 18 to the radius of the core 4 is preferably less than 76%. The golf ball 2 has excellent resilience performance. In this respect, the ratio is more preferably equal to or less than 75%. The ratio is preferably equal to or greater than 65%. Thus, the center 16 having a sufficient thickness can be obtained. In the golf ball 2, spin can be effectively suppressed. In this respect, the ratio is more preferably equal to or greater than 70%. When the golf ball 2 is hit with a driver, the flight distance is large.

In the present invention, JIS-C hardnesses are measured at eleven measuring points obtained by dividing a region from the central point of the core 4 to the surface of the core 4 into ten sections. The ratio of the distance from the central point of the core 4 to each of these measuring points to the radius of the core 4 is as follows. In the golf ball 2, the first to third points are included in the center 16. The fourth to seventh points are included in the first envelope layer 18. The eighth to eleventh points are included in the second envelope layer 20.

First point: 0.0% (central point)
Second point: 18.0%
Third point: 36.0%
Fourth point: 39.0%
Fifth point: 51.0%
Sixth point: 63.0%
Seventh point: 75.0%
Eighth point: 76.0%
Ninth point: 84.0%
Tenth point: 92.0%
Eleventh point: 100.0% (surface)

Hardnesses at the first to tenth points are measured by pressing a JIS-C type hardness scale against a cut plane of the core 4 that has been cut into two halves. A hardness at the eleventh point is measured by pressing the JIS-C type hardness scale against the surface of the spherical core 4. For the measurement, an automated rubber hardness

measurement machine (trade name "P1", manufactured by Kobunshi Keiki Co., Ltd.), to which this hardness scale is mounted, is used.

FIG. 2 is a line graph showing a hardness distribution of the first envelope layer 18 of the golf ball 2 in FIG. 1. The horizontal axis of the graph indicates the ratio (%) of a distance from the central point of the core 4 to the radius of the core 4. The vertical axis of the graph indicates a JIS-C hardness. In the graph, among the first to eleventh points, the points included in the first envelope layer 18 are plotted. In the present embodiment, four points including the fourth to seventh points are plotted in the graph.

FIG. 2 also shows a linear approximation curve obtained by a least-square method on the basis of the ratios and the hardnesses of the four measuring points. The linear approximation curve is indicated by a dotted line. In FIG. 2, the broken line does not greatly deviate from the linear approximation curve. In other words, the broken line has a shape close to the linear approximation curve. In the first envelope layer 18, the hardness linearly increases from its inside toward its outside. When the golf ball 2 is hit with a driver, the energy loss is low in the first envelope layer 18. The golf ball 2 has excellent resilience performance. When the golf ball 2 is hit with a driver, the flight distance is large. When the golf ball 2 is hit with a golf club, stress concentration does not occur. Thus, the golf ball 2 has excellent durability.

$R^2$ of the linear approximation curve for the first envelope layer 18 which is obtained by the least-square method is preferably equal to or greater than 0.95. $R^2$ is an index indicating the linearity of the broken line. For the first envelope layer 18 for which $R^2$ is equal to or greater than 0.95, the shape of the broken line of the hardness distribution is close to a straight line. The golf ball 2 that includes the first envelope layer 18 for which $R^2$ is equal to or greater than 0.95 has excellent resilience performance. $R^2$ is more preferably equal to or greater than 0.96 and particularly preferably equal to or greater than 0.97. $R^2$ is calculated by squaring a correlation coefficient R. The correlation coefficient R is calculated by dividing the covariance of the distance (%) from the central point and the hardness (JIS-C) by the standard deviation of the distance (%) from the central point and the standard deviation of the hardness (JIS-C). In light of suppression of spin, the gradient $\alpha 1$ of the linear approximation curve is preferably equal to or greater than 0.70 and more preferably equal to or greater than 0.82. The gradient $\alpha 1$ is preferably equal to or less than 1.18 and more preferably equal to or less than 1.04.

FIG. 3 is a line graph showing a hardness distribution of the second envelope layer 20 of the golf ball 2 in FIG. 1. The horizontal axis of the graph indicates the ratio (%) of a distance from the central point of the core 4 to the radius of the core 4. The vertical axis of the graph indicates a JIS-C hardness. In the graph, among the first to eleventh points, the points included in the second envelope layer 20 are plotted. In the present embodiment, four points including the eighth to eleventh points are plotted in the graph.

FIG. 3 also shows a linear approximation curve obtained by a least-square method on the basis of the ratios and the hardnesses of the four measuring points. The linear approximation curve is indicated by a dotted line. In FIG. 3, the broken line does not greatly deviate from the linear approximation curve. In other words, the broken line has a shape close to the linear approximation curve. In the second envelope layer 20, the hardness linearly increases from its inside toward its outside. When the golf ball 2 is hit with a driver, the energy loss is low in the second envelope layer 20. The golf ball 2 has excellent resilience performance. When the golf ball 2 is hit with a driver, the flight distance is large. When the golf ball 2 is hit with a golf club, stress concentration does not occur. Thus, the golf ball 2 has excellent durability.

$R^2$ of the linear approximation curve for the second envelope layer 20 which is obtained by the least-square method is preferably equal to or greater than 0.95. For the second envelope layer 20 for which $R^2$ is equal to or greater than 0.95, the shape of the broken line of the hardness distribution is close to a straight line. The golf ball 2 that includes the second envelope layer 20 for which $R^2$ is equal to or greater than 0.95 has excellent resilience performance. $R^2$ is more preferably equal to or greater than 0.96 and particularly preferably equal to or greater than 0.97. $R^2$ is calculated in the same manner as that for the above first envelope layer.

In light of suppression of spin, the gradient $\alpha 2$ of the linear approximation curve is preferably equal to or greater than 0.30 and more preferably equal to or greater than 0.77. The gradient $\alpha 2$ is preferably equal to or less than 1.40 and more preferably equal to or less than 1.35.

The center 16 is formed by crosslinking a rubber composition. Examples of base rubbers for use in the rubber composition include polybutadienes, polyisoprenes, styrene-butadiene copolymers, ethylene-propylene-diene copolymers, and natural rubbers. Two or more rubbers may be used in combination. In light of resilience performance, polybutadienes are preferred, and high-cis polybutadienes are particularly preferred.

Preferably, the rubber composition of the center 16 includes a co-crosslinking agent. Examples of preferable co-crosslinking agents in light of resilience performance include zinc acrylate, magnesium acrylate, zinc methacrylate, andmagnesiummethacrylate. Preferably, the rubber composition includes an organic peroxide together with a co-crosslinking agent. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. Preferably, the rubber composition includes a sulfur compound.

According to need, various additives such as a filler, sulfur, a vulcanization accelerator, an anti-aging agent, a

coloring agent, a plasticizer, a dispersant, and the like are included in the rubber composition of the center 16 in an adequate amount. Synthetic resin powder or crosslinked rubber powder may also be included in the rubber composition.

The first envelope layer 18 is formed by crosslinking a first rubber composition. The first rubber composition includes:

(1a) a base rubber;
(1b) a co-crosslinking agent;
(1c) a crosslinking initiator; and
(1d) an acid and/or a salt.

Examples of the base rubber (1a) include polybutadienes, polyisoprenes, styrene-butadiene copolymers, ethylene-propylene-diene copolymers, and natural rubbers. In light of resilience performance, polybutadienes are preferred. When a polybutadiene and another rubber are used in combination, it is preferred that the polybutadiene is included as a principal component. Specifically, the proportion of the polybutadiene to the entire base rubber is preferably equal to or greater than 50% by weight and more preferably equal to or greater than 80% by weight. The proportion of cis-1,4 bonds in the polybutadiene is preferably equal to or greater than 40% by weight and more preferably equal to or greater than 80% by weight.

A polybutadiene in which the proportion of 1, 2-vinyl bonds is equal to or less than 2.0% by weight is preferred. The polybutadiene can contribute to the resilience performance of the golf ball 2. In this respect, the proportion of 1,2-vinyl bonds is preferably equal to or less than 1.7% by weight and particularly preferably equal to or less than 1.5% by weight.

From the standpoint that a polybutadiene having a low proportion of 1,2-vinyl bonds and excellent polymerization activity is obtained, a rare-earth-element-containing catalyst is preferably used for synthesis of a polybutadiene. In particular, a polybutadiene synthesized with a catalyst containing neodymium, which is a lanthanum-series rare earth element compound, is preferred.

The polybutadiene has a Mooney viscosity ($ML_{1+4}$ (100°C)) of preferably 30 or greater, more preferably 32 or greater, and particularly preferably 35 or greater. The Mooney viscosity ($ML_{1+4}$(100°C)) is preferably equal to or less than 140, more preferably equal to or less than 120, even more preferably equal to or less than 100, and particularly preferably equal to or less than 80. The Mooney viscosity ($ML_{1+4}$ (100°C)) is measured according to the standards of "JIS K6300". The measurement conditions are as follows.
Rotor: L rotor
Preheating time: 1 minute
Rotating time of rotor: 4 minutes
Temperature: 100°C

In light of workability, the polybutadiene has a molecular weight distribution (Mw/Mn) of preferably 2.0 or greater, more preferably 2.2 or greater, even more preferably 2.4 or greater, and particularly preferably 2.6 or greater. In light of resilience performance, the molecular weight distribution (Mw/Mn) is preferably equal to or less than 6.0, more preferably equal to or less than 5.0, even more preferably equal to or less than 4.0, and particularly preferably equal to or less than 3.4. The molecular weight distribution (Mw/Mn) is calculated by dividing the weight average molecular weight Mw by the number average molecular weight Mn.

The molecular weight distribution is measured by gel permeation chromatography ("HLC-8120GPC" manufactured by Tosoh Corporation). The measurement conditions are as follows.
Detector: differential refractometer
Column: GMHHXL (manufactured by Tosoh Corporation)
Column temperature: 40°C
Mobile phase: tetrahydrofuran The molecular weight distribution is calculated as a value obtained by conversion using polystyrene standard.

The co-crosslinking agent (1b) is:

(1b-1) an α,β-unsaturated carboxylic acid having 3 to 8 carbon atoms; and/or
(1b-2) a metal salt of an α,β-unsaturated carboxylic acid having 3 to 8 carbon atoms.

The first rubber composition may include only the α,β-unsaturated carboxylic acid (1b-1) or only the metal salt (1b-2) of the α,β-unsaturated carboxylic acid as the co-crosslinking agent (1b). The first rubber composition may include both the α,β-unsaturated carboxylic acid (1b-1) and the metal salt (1b-2) of the α,β-unsaturated carboxylic acid as the co-crosslinking agent (1b).

The metal salt (1b-2) of the α,β-unsaturated carboxylic acid graft-polymerizes with the molecular chain of the base rubber, thereby crosslinking the rubber molecules. When the first rubber composition includes the α,β-unsaturated

carboxylic acid (1b-1), the first rubber composition preferably further includes a metal compound (1f). The metal compound (1f) reacts with the α,β-unsaturated carboxylic acid (1b-1) in the first rubber composition. A salt obtained by this reaction graft-polymerizes with the molecular chain of the base rubber.

Examples of the metal compound (1f) include metal hydroxides such as magnesium hydroxide, zinc hydroxide, calcium hydroxide, sodium hydroxide, lithium hydroxide, potassium hydroxide, and copper hydroxide; metal oxides such as magnesium oxide, calcium oxide, zinc oxide, and copper oxide; and metal carbonates such as magnesium carbonate, zinc carbonate, calcium carbonate, sodium carbonate, lithium carbonate, and potassium carbonate. A compound that includes a bivalent metal is preferred. The compound that includes the bivalent metal reacts with the co-crosslinking agent (1b) to form metal crosslinks. The metal compound (1f) is particularly preferably a zinc compound. Two or more metal compounds may be used in combination.

Examples of the α,β-unsaturated carboxylic acids include acrylic acid, methacrylic acid, fumaric acid, maleic acid, and crotonic acid. Examples of the metal component in the metal salt (1b-2) of the α,β-unsaturated carboxylic acid include sodium ion, potassium ion, lithium ion, magnesium ion, calcium ion, zinc ion, barium ion, cadmium ion, aluminum ion, tin ion, and zirconium ion. The metal salt (1b-2) of the α,β-unsaturated carboxylic acid may include two or more types of ions. From the standpoint that metal crosslinks are likely to occur between the rubber molecules, bivalent metal ions such as magnesium ion, calcium ion, zinc ion, barium ion, and cadmium ion are preferred. The metal salt (1b-2) of the α,β-unsaturated carboxylic acid is particularly preferably zinc acrylate.

In light of resilience performance of the golf ball 2, the amount of the co-crosslinking agent (1b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight, more preferably equal to or less than 45 parts by weight, and particularly preferably equal to or less than 40 parts by weight, per 100 parts by weight of the base rubber.

The crosslinking initiator (1c) is preferably an organic peroxide. The organic peroxide contributes to the resilience performance of the golf ball 2. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. In light of versatility, dicumyl peroxide is preferred.

In light of resilience performance of the golf ball 2, the amount of the crosslinking initiator (1c) is preferably equal to or greater than 0.2 parts by weight and particularly preferably equal to or greater than 0.5 parts by weight, per 100 parts by weight of the base rubber. In light of feel at impact and durability of the golf ball 2, the amount is preferably equal to or less than 5.0 parts by weight and particularly preferably equal to or less than 2.5 parts by weight, per 100 parts by weight of the base rubber.

In the present invention, the co-crosslinking agent (1b) is not included in the concept of the acid and/or the salt (1d). It is inferred that as described later, during heating and forming of the core 4, the acid and/or the salt (1d) breaks the metal crosslinks by the co-crosslinking agent (1b).

Examples of the acid and/or the salt (1d) include oxo acids, such as carboxylic acids, sulfonic acids, and phosphoric acid, and salts thereof; and hydroacids, such as hydrochloric acid and hydrofluoric acid, and salts thereof. Oxo acids and salts thereof are preferred. A carboxylic acid and/or a salt thereof (1d-1) is preferred. Carboxylates are particularly preferred.

The carboxylic acid component of the carboxylic acid and/or the salt thereof (1d-1) has a carboxyl group. The carboxylic acid component reacts with the co-crosslinking agent (1b). It is inferred that by this reaction, metal crosslinks are broken.

The carbon number of the carboxylic acid component of the carboxylic acid and/or the salt thereof (1d-1) is preferably equal to or greater than 1 but equal to or less than 30, more preferably equal to or greater than 3 but equal to or less than 30, and even more preferably equal to or greater than 5 but equal to or less than 28. Examples of the carboxylic acid include aliphatic carboxylic acids (fatty acids) and aromatic carboxylic acids. A fatty acid and/or a salt thereof is preferred. The carbon number of the fatty acid component of the fatty acid and/or the salt thereof is preferably equal to or greater than 1 but equal to or less than 30.

The first rubber composition may include a saturated fatty acid and/or a salt thereof, or may include an unsaturated fatty acid and/or a salt thereof. The saturated fatty acid and/or the salt thereof are preferred.

Examples of fatty acids include butyric acid (C4), valeric acid (C5), caproic acid (C6), enanthic acid (C7), caprylic acid (octanoic acid) (C8), pelargonic acid (C9), capric acid (decanoic acid) (C10), lauric acid (C12), myristic acid (C14), myristoleic acid (C14), pentadecylic acid (C15), palmitic acid (C16), palmitoleic acid (C16), margaric acid (C17), stearic acid (C18), elaidic acid (C18), vaccenic acid (C18), oleic acid (C18), linolic acid (C18), linolenic acid (C18), 12-hydroxystearic acid (C18), arachidic acid (C20), gadoleic acid (C20), arachidonic acid (C20), eicosenoic acid (C20), behenic acid (C22), erucic acid (C22), lignoceric acid (C24), nervonic acid (C24), cerotic acid (C26), montanic acid (C28), and melissic acid (C30). Two or more fatty acids may be used in combination. Octanoic acid, lauric acid, myristic acid, palmitic acid, stearic acid, oleic acid, and behenic acid are preferred.

An aromatic carboxylic acid has an aromatic ring and a carboxyl group. Examples of aromatic carboxylic acids

include benzoic acid, phthalic acid, isophthalic acid, terephthalic acid, hemimellitic acid (benzene-1,2,3-tricarboxylic acid), trimellitic acid (benzene-1,2,4-tricarboxylic acid), trimesic acid (benzene-1,3,5-tricarboxylic acid), mellophanic acid (benzene-1,2,3,4-tetracarboxylic acid), prehnitic acid (benzene-1,2,3,5-tetracarboxylic acid), pyromellitic acid (benzene-1,2,4,5-tetracarboxylic acid),mellitic acid(benzene hexacarboxylic acid), diphenic acid (biphenyl-2,2'-dicarboxylic acid), toluic acid (methylbenzoic acid), xylic acid, prehnitylic acid (2,3,4-trimethylbenzoic acid), γ-isodurylic acid (2,3,5-trimethylbenzoic acid), durylic acid (2,4,5-trimethylbenzoic acid), β-isodurylic acid (2,4,6-trimethylbenzoic acid), α-isodurylic acid (3,4,5-trimethylbenzoic acid), cuminic acid (4-isopropylbenzoic acid), uvitic acid (5-methylisophthalic acid), α-toluic acid (phenylacetic acid), hydratropic acid (2-phenylpropanoic acid), and hydrocinnamic acid (3-phenylpropanoic acid).

The first rubber composition may include an aromatic carboxylate substituted with a hydroxyl group, an alkoxy group, or an oxo group. Examples of this carboxylic acid can include salicylic acid (2-hydroxybenzoic acid), anisic acid (methoxybenzoic acid), cresotinic acid (hydroxy(methyl) benzoic acid),o-homosalicylic acid(2-hydroxy-3-methylbenzoic acid), m-homosalicylic acid (2-hydroxy-4-methylbenzoic acid), p-homosalicylic acid (2-hydroxy-5-methylbenzoic acid), o-pyrocatechuic acid(2,3-dihydroxybenzoic acid), β-resorcylic acid (2,4-dihydroxybenzoic acid), γ-resorcylic acid (2,6-dihydroxybenzoic acid), protocatechuic acid (3,4-dihydroxybenzoic acid), α-resorcylic acid (3,5-dihydroxybenzoic acid), vanillic acid (4-hydroxy-3-methoxybenzoic acid), isovanillic acid (3-hydroxy-4-methoxybenzoic acid), veratric acid (3,4-dimethoxybenzoic acid), o-veratric acid (2,3-dimethoxybenzoic acid), orsellinic acid (2,4-dihydroxy-6-methylbenzoic acid), m-hemipinic acid (4,5-dimethoxyphthalic acid), gallic acid (3,4,5-trihydroxybenzoic acid), syringic acid (4-hydroxy-3,5-dimethoxybenzoic acid), asaronic acid (2,4,5-trimethoxybenzoic acid), mandelic acid (hydroxy(phenyl)acetic acid), vanillylmandelic acid (hydroxy(4-hydroxy-3-methoxyphenyl)acetic acid), homoanisic acid ((4-methoxyphenyl)acetic acid), homogentisic acid ((2,5-dihydroxyphenyl)acetic acid), homoprotocatechuic acid ((3,4-dihydroxyphenyl)acetic acid), homovanillic acid ((4-hydroxy-3-methoxyphenyl)acetic acid), homoisovanillic acid ((3-hydroxy-4-methoxyphenyl)acetic acid), homoveratric acid ((3,4-dimethoxyphenyl)acetic acid), o-homoveratric acid ((2,3-dimethoxyphenyl)acetic acid), homophthalic acid (2-(carboxymethyl)benzoic acid), homoisophthalic acid (3-(carboxymethyl)benzoic acid), homoterephthalic acid (4-(carboxymethyl)benzoic acid), phthalonic acid (2-(carboxycarbonyl)benzoic acid), isophthalonic acid (3-(carboxycarbonyl)benzoic acid), terephthalonic acid (4-(carboxycarbonyl)benzoic acid), benzilic acid (hydroxydiphenylacetic acid), atrolactic acid (2-hydroxy-2-phenylpropanoic acid), tropic acid (3-hydroxy-2-phenylpropanoic acid), melilotic acid (3-(2-hydroxyphenyl)propanoic acid), phloretic acid (3-(4-hydroxyphenyl)propanoic acid), hydrocaffeic acid (3-(3,4-dihydroxyphenyl)propanoic acid), hydroferulic acid (3-(4-hydroxy-3-methoxyphenyl)propanoic acid), hydroisoferulic acid (3-(3-hydroxy-4-methoxyphenyl)propanoic acid), p-coumaric acid (3-(4-hydroxyphenyl)acrylic acid), umbellic acid (3-(2,4-dihydroxyphenyl)acrylic acid), caffeic acid (3-(3,4-dihydroxyphenyl)acrylic acid), ferulic acid (3-(4-hydroxy-3-methoxyphenyl)acrylic acid), isoferulic acid (3- (3-hydroxy-4-methoxyphenyl) acrylic acid), and sinapic acid (3-(4-hydroxy-3,5-dimethoxyphenyl)acrylic acid).

The cationic component of the carboxylate is a metal ion or an organic cation. Examples of the metal ion include sodium ion, potassium ion, lithium ion, silver ion, magnesium ion, calciumion, zinc ion, barium ion, cadmiumion, copper ion, cobalt ion, nickel ion, manganese ion, aluminum ion, iron ion, tin ion, zirconium ion, and titanium ion. Two or more types of ions may be used in combination.

The organic cation is a cation having a carbon chain. Examples of the organic cation include organic ammonium ions. Examples of organic ammonium ions include primary ammonium ions such as stearylammonium ion, hexylammonium ion, octylammonium ion, and 2 -ethylhexyl ammonium ion; secondary ammonium ions such as dodecyl (lauryl) ammonium ion, and octadecyl (stearyl) ammonium ion; tertiary ammonium ions such as trioctylammonium ion; and quaternary ammonium ions such as dioctyldimethylammonium ion, and distearyldimethylammonium ion. Two or more types of organic cations may be used in combination.

Examples of preferable carboxylates include a potassium salt, a magnesium salt, an aluminum salt, a zinc salt, an iron salt, a copper salt, a nickel salt, or a cobalt salt of octanoic acid, lauric acid, myristic acid, palmitic acid, stearic acid, oleic acid, or behenic acid. Zinc salts of carboxylic acids are particularly preferred. Specific examples of preferable carboxylates include zinc octoate, zinc laurate, zinc myristate, and zinc stearate. A particularly preferable carboxylate is zinc octoate.

In light of linearity of the hardness distribution of the core 4, the amount of the acid and/or the salt (1d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably equal to or less than 45 parts by weight, more preferably equal to or less than 40 parts by weight, and particularly preferably equal to or less than 30 parts by weight, per 100 parts by weight of the base rubber.

The weight ratio of the co-crosslinking agent (1b) and the acid and/or the salt (1d) in the first rubber composition is preferably equal to or greater than 3/7 but equal to or less than 9/1. From the first rubber composition in which this weight ratio is within the above range, the first envelope layer 18 whose hardness linearly increases from its inside toward its outside can be obtained.

As the co-crosslinking agent (1b), zinc acrylate is preferably used. Zinc acrylate whose surface is coated with

stearic acid or zinc stearate for the purpose of improving dispersibility to rubber is present. In the present invention, when the first rubber composition includes this zinc acrylate, this coating material is not included in the concept of the acid and/or the salt (1d).

Preferably, the first rubber composition further includes an organic sulfur compound (1e). The organic sulfur compound (1e) increases the linearity of the hardness distribution of the first envelope layer 18. In addition, the organic sulfur compound (1e) increases the degree of an outer-hard/inner-soft structure.

An example of the organic sulfur compound (1e) is an organic compound having a thiol group or a polysulfide linkage having 2 to 4 sulfur atoms. A metal salt of this organic compound is also included in the organic sulfur compound (1e). Examples of the organic sulfur compound (1e) include aliphatic compounds such as aliphatic thiols, aliphatic thiocarboxylic acids, aliphatic dithiocarboxylic acids, and aliphatic polysulfides; heterocyclic compounds; alicyclic compounds such as alicyclic thiols, alicyclic thiocarboxylic acids, alicyclic dithiocarboxylic acids, and alicyclic polysulfides; and aromatic compounds. Specific examples of the organic sulfur compound (1e) include thiophenols, thionaphthols, polysulfides, thiocarboxylic acids, dithiocarboxylic acids, sulfenamides, thiurams, dithiocarbamates, and thiazoles. Preferable organic sulfur compounds (1e) are thiophenols, diphenyl disulfides, thionaphthols, thiuram disulfides, and metal salts thereof.

Specific examples of the organic sulfur compound (1e) are represented by the following chemical formulas (1) to (4).

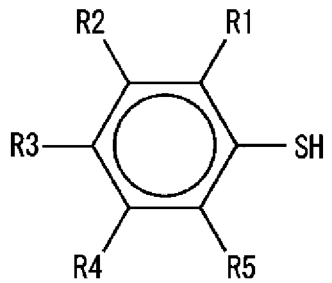

(1)

In the chemical formula (1), R1 to R5 each represent H or a substituent.

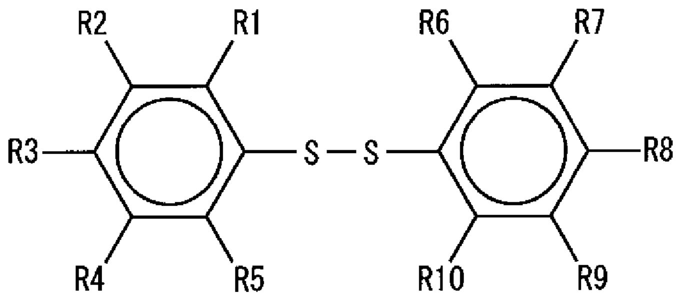

(2)

In the chemical formula (2), R1 to R10 each represent H or a substituent.

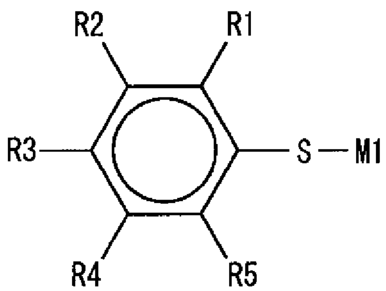

(3)

In the chemical formula (3), R1 to R5 each represent H or a substituent, and M1 represents a monovalent metal atom.

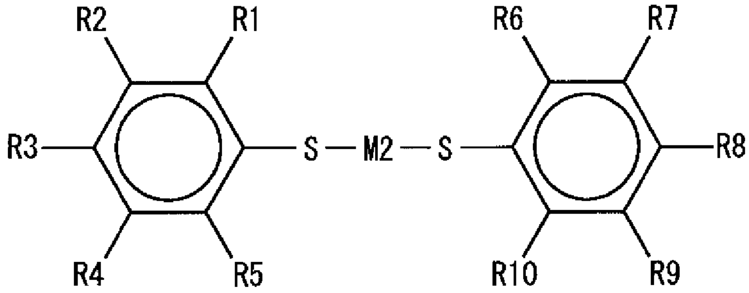

(4)

In the chemical formula (4), R1 to R10 each represent H or a substituent, and M2 represents a bivalent metal atom.

In the formulas (1) to (4), each substituent is at least one group selected from the group consisting of a halogen group (F, Cl, Br, I), an alkyl group, a carboxyl group (-COOH), an ester (-COOR)of a carboxyl group, a formyl group (-CHO), an acyl group (-COR), a carbonyl halide group (-COX), a sulfo group ($-SO_3H$), an ester ($-SO_3R$) of a sulfo group, a sulfonyl halide group ($-SO_2X$), a sulfino group ($-SO_2H$), an alkylsulfinyl group (-SOR), a carbamoyl group ($-CONH_2$), an alkyl halide group, a cyano group (-CN), and an alkoxy group (-OR).

Examples of the organic sulfur compound (1e) represented by the chemical formula (1) include thiophenol; thiophenols substituted with halogen groups, such as 4-fluorothiophenol, 2,5-difluorothiophenol, 2,4,5-trifluorothiophenol, 2,4,5,6-tetrafluorothiophenol, pentafluorothiophenol, 2-chlorothiophenol, 4-chlorothiophenol, 2,4-dichlorothiophenol, 2,5-dichlorothiophenol, 2,6-dichlorothiophenol, 2,4,5-trichlorothiophenol, 2,4,5,6-tetrachlorothiophenol, pentachlorothiophenol, 4-bromothiophenol, 2,5-dibromothiophenol, 2,4,5-tribromothiophenol, 2,4,5,6-tetrabromothiophenol, pentabromothiophenol, 4-iodothiophenol, 2,5-diiodothiophenol, 2,4,5-triiodothiophenol, 2,4,5,6-tetraiodothiophenol, and pentaiodothiophenol; thiophenols substituted with alkyl groups, such as 4-methylthiophenol, 2,4,5-trimethylthiophenol, pentamethylthiophenol, 4-t-butylthiophenol, 2,4,5-tri-t-butylthiophenol, and penta-t-butylthiophenol; thiophenols substituted with carboxyl groups, such as 4-carboxythiophenol, 2,4,6-tricarboxythiophenol, and pentacarboxythiophenol; thiophenols substituted with alkoxycarbonyl groups, such as 4-methoxycarbonylthiophenol, 2,4,6-trimethoxycarbonylthiophenol, and pentamethoxycarbonylthiophenol; thiophenols substituted with formyl groups, such as 4-formylthiophenol, 2,4,6-triformylthiophenol, and pentaformylthiophenol; thiophenols substituted with acyl groups, such as 4-acetylthiophenol, 2,4,6-triacetylthiophenol, and pentaacetylthiophenol; thiophenols substituted with carbonyl halide groups, such as 4-chlorocarbonylthiophenol, 2,4,6-tri(chlorocarbonyl)thiophenol, and penta(chlorocarbonyl)thiophenol; thiophenols substituted with sulfo groups, such as 4-sulfothiophenol, 2,4,6-trisulfothiophenol, and pentasulfothiophenol; thiophenols substituted with alkoxysulfonyl groups, such as 4-methoxysulfonylthiophenol, 2,4,6-trimethoxysulfonylthiophenol, and pentamethoxysulfonylthiophenol; thiophenols substituted with sulfonyl halide groups, such as 4-chlorosulfonylthiophenol, 2,4,6-tri(chlorosulfonyl)thiophenol, and penta(chlorosulfonyl)thiophenol; thiophenols substituted with sulfino groups, such as 4-sulfinothiophenol, 2,4,6-trisulfinothiophenol, and pentasulfinothiophenol; thiophenols substituted with alkylsulfinyl groups, such as 4-methylsulfinylthiophenol, 2,4,6-tri(methylsulfinyl)thiophenol, and penta(methylsulfinyl)thiophenol; thiophenols substituted with carbamoyl groups, such as 4-carbamoylthiophenol, 2,4,6-tricarbamoylthiophenol, and pentacarbamoylthiophenol; thiophenols substituted with alkyl halide groups, such as 4-trichloromethylthiophenol, 2,4,6-tri(trichloromethyl)thiophenol, and penta(trichloromethyl)thiophenol; thiophenols substituted with cyano groups, such as 4-cyanothiophenol, 2,4,6-tricyanothiophenol, and pentacyanothiophenol; and thiophenols substituted with alkoxy groups, such as 4-methoxythiophenol, 2,4,6-trimethoxythiophenol, and pentamethoxythiophenol. Each of these thiophenols is substituted with one type of substituent.

Another example of the organic sulfur compound (1e) represented by the chemical formula (1) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include 4-chloro-2-nitrothiophenol, 4-chloro-2-aminothiophenol, 4-chloro-2-hydroxythiophenol, 4-chloro-2-phenylthiothiophenol, 4-methyl-2-nitrothiophenol, 4-methyl-2-aminothiophenol, 4-methyl-2-hydroxythiophenol, 4-methyl-2-phenylthiothiophenol, 4-carboxy-2-nitrothiophenol, 4-carboxy-2-aminothiophenol, 4-carboxy-2-hydroxythiophenol, 4-carboxy-2-phenylthiothiophenol, 4-methoxycarbonyl-2-nitrothiophenol, 4-methoxycarbonyl-2-aminothiophenol, 4-methoxycarbonyl-2-hydroxythiophenol, 4-methoxycarbonyl-2-phenylthiothiophenol, 4-formyl-2-nitrothiophenol, 4-formyl-2-aminothiophenol, 4-formyl-2-hydroxythiophenol, 4-formyl-2-phenylthiothiophenol, 4-acetyl-2-nitrothiophenol, 4-acetyl-2-aminothiophenol, 4-acetyl-2-hydroxythiophenol, 4-acetyl-2-phenylthiothiophenol, 4-chlorocarbonyl-2-nitrothiophenol, 4-chlorocarbonyl-2-aminothiophenol, 4-chlorocarbonyl-2-hydroxythiophenol, 4-chlorocarbonyl-2-phenylthiothiophenol, 4-sulfo-2-nitrothiophenol, 4-sulfo-2-aminothiophenol, 4-sulfo-2-hydroxythiophenol, 4-sulfo-2-phenylthiothiophenol, 4-methoxysulfonyl-2-nitrothiophenol, 4-methoxysulfonyl-2-aminothiophenol, 4-methoxysulfonyl-2-hydroxythiophenol, 4-methoxysulfonyl-2-phenylthiothiophenol, 4-chlorosulfonyl-2-nitrothiophenol, 4-chlorosulfonyl-2-aminothiophenol, 4-chlorosulfonyl-2-hydroxythiophenol, 4-chlorosulfonyl-2-phenylthiothiophenol, 4-sulfino-2-nitrothiophenol, 4-sulfino-2-aminothiophenol, 4-sulfino-2-hydroxythiophenol, 4-sulfino-2-phenylthiothiophenol, 4-methylsulfinyl-2-nitrothiophenol, 4-methylsulfinyl-2-aminothiophenol, 4-methylsulfinyl-2-hydroxythiophenol, 4-methylsulfinyl-2-phenylthiothiophenol, 4-carbamoyl-2-nitrothiophenol, 4-carbamoyl-2-aminothiophenol, 4-carbamoyl-2-hydroxythiophenol, 4-carbamoyl-2-phenylthiothiophenol, 4-trichloromethyl-2-nitrothiophenol, 4-trichloromethyl-2-aminothiophenol, 4-trichloromethyl-2-hydroxythiophenol, 4-trichloromethyl-2-phenylthiothiophenol, 4-cyano-2-nitrothiophenol, 4-cyano-2-aminothiophenol, 4-cyano-2-hydroxythiophenol, 4-cyano-2-phenylthiothiophenol, 4-methoxy-2-nitrothiophenol, 4-methoxy-2-aminothiophenol, 4-methoxy-2-hydroxythiophenol, and 4-methoxy-2-phenylthiothiophenol.

Still another example of the organic sulfur compound (1e) represented by the chemical formula (1) is a compound substituted with two or more types of substituents. Specific examples of the compound include 4-acetyl-2-chlorothiophenol, 4-acetyl-2-methylthiophenol, 4-acetyl-2-carboxythiophenol, 4-acetyl-2-methoxycarbonylthiophenol, 4-acetyl-2-formylthiophenol, 4-acetyl-2-chlorocarbonylthiophenol, 4-acetyl-2-sulfothiophenol, 4-acetyl-2-methoxysulfonylthiophenol, 4-acetyl-2-chlorosulfonylthiophenol, 4-acetyl-2-sulfinothiophenol, 4-acetyl-2-methylsulfinylthiophenol, 4-acetyl-2-carbamoylthiophenol, 4-acetyl-2-trichloromethylthiophenol, 4-acetyl-2-cyanothiophenol, and 4-acetyl-2-methoxythiophenol.

Examples of the organic sulfur compound (1e) represented by the chemical formula (2) include diphenyl disulfide; diphenyl disulfides substituted with halogen groups, such as bis(4-fluorophenyl)disulfide, bis(2,5-difluorophenyl)disulfide, bis(2,4,5-trifluorophenyl)disulfide, bis(2,4,5,6-tetrafluorophenyl)disulfide, bis(pentafluorophenyl)disulfide, bis(4-chlorophenyl)disulfide, bis(2,5-dichlorophenyl)disulfide, bis(2,4,5-trichlorophenyl)disulfide, bis(2,4,5,6-tetrachlorophenyl)disulfide, bis(pentachlorophenyl)disulfide, bis(4-bromophenyl)disulfide, bis(2,5-dibromophenyl)disulfide, bis(2,4,5-tribromophenyl)disulfide, bis(2,4,5,6-tetrabromophenyl)disulfide, bis(pentabromophenyl)disulfide, bis(4-iodophenyl)disulfide, bis(2,5-diiodophenyl)disulfide, bis(2,4,5-triiodophenyl)disulfide, bis(2,4,5,6-tetraiodophenyl)disulfide, and bis(pentaiodophenyl)disulfide; diphenyl disulfides substituted with alkyl groups, such as bis(4-methylphenyl)disulfide, bis(2,4,5-trimethylphenyl)disulfide, bis(pentamethylphenyl)disulfide, bis(4-t-butylphenyl)disulfide, bis(2,4,5-tri-t-butylphenyl)disulfide, and bis(penta-t-butylphenyl)disulfide; diphenyl disulfides substituted with carboxyl groups, such as bis(4-carboxyphenyl)disulfide, bis(2,4,6-tricarboxyphenyl)disulfide, and bis(pentacarboxyphenyl)disulfide; diphenyl disulfides substituted with alkoxycarbonyl groups, such as bis(4-methoxycarbonylphenyl)disulfide, bis(2,4,6-trimethoxycarbonylphenyl)disulfide, and bis(pentamethoxycarbonylphenyl)disulfide; diphenyl disulfides substituted with formyl groups, such as bis(4-formylphenyl)disulfide, bis(2,4,6-triformylphenyl)disulfide, and bis(pentaformylphenyl)disulfide; diphenyl disulfides substituted with acyl groups, such as bis(4-acetylphenyl)disulfide, bis(2,4,6-triacetylphenyl)disulfide, and bis(pentaacetylphenyl)disulfide; diphenyl disulfides substituted with carbonyl halide groups, such as bis(4-chlorocarbonylphenyl)disulfide, bis(2,4,6-tri(chlorocarbonyl)phenyl)disulfide, and bis(penta(chlorocarbonyl)phenyl)disulfide; diphenyl disulfides substituted with sulfo groups, such as bis(4-sulfophenyl)disulfide, bis(2,4,6-trisulfophenyl)disulfide, and bis(pentasulfophenyl)disulfide; diphenyl disulfides substituted with alkoxysulfonyl groups, such as bis(4-methoxysulfonylphenyl)disulfide, bis(2,4,6-trimethoxysulfonylphenyl)disulfide, and bis(pentamethoxysulfonylphenyl)disulfide; diphenyl disulfides substituted with sulfonyl halide groups, such as bis(4-chlorosulfonylphenyl)disulfide, bis(2,4,6-tri(chlorosulfonyl)phenyl)disulfide, and bis(penta(chlorosulfonyl)phenyl)disulfide; diphenyl disulfides substituted with sulfino groups, such as bis(4-sulfinophenyl)disulfide, bis(2,4,6-trisulfinophenyl)disulfide, and bis(pentasulfinophenyl)disulfide; diphenyl disulfides substituted with alkylsulfinyl groups, such as bis(4-methylsulfinylphenyl)disulfide, bis(2,4,6-tri(methylsulfinyl)phenyl)disulfide, and bis(penta(methylsulfinyl)phenyl)disulfide; diphenyl disulfides substituted with carbamoyl groups, such as bis(4-carbamoylphenyl)disulfide, bis(2,4,6-tricarbamoylphenyl)disulfide, and bis(pentacarbamoylphenyl)disulfide; diphenyl disulfides substituted with alkyl halide groups, such as bis(4-trichloromethylphenyl)disulfide, bis(2,4,6-tri(trichloromethyl)phenyl)disulfide, and bis(penta(trichloromethyl)phenyl)disulfide; diphenyl disulfides substituted with cyano groups, such as bis(4-cyanophenyl)disulfide, bis(2,4,6-tricyanophenyl)disulfide, and bis(pentacyanophenyl)disulfide; and diphenyl disulfides substituted with alkoxy groups, such as bis(4-methoxyphenyl)disulfide, bis(2,4,6-trimethoxyphenyl)disulfide, and bis(pentamethoxyphenyl)disulfide. Each of these diphenyl disulfides is substituted with one type of substituent.

Another example of the organic sulfur compound (1e) represented by the chemical formula (2) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include bis(4-chloro-2-nitrophenyl)disulfide, bis(4-chloro-2-aminophenyl)disulfide, bis(4-chloro-2-hydroxyphenyl)disulfide, bis(4-chloro-2-phenylthiophenyl)disulfide, bis(4-methyl-2-nitrophenyl)disulfide, bis(4-methyl-2-aminophenyl)disulfide, bis(4-methyl-2-hydroxyphenyl)disulfide, bis(4-methyl-2-phenylthiophenyl)disulfide, bis(4-carboxy-2-nitrophenyl)disulfide, bis(4-carboxy-2-aminophenyl)disulfide, bis(4-carboxy-2-hydroxyphenyl)disulfide, bis(4-carboxy-2-phenylthiophenyl)disulfide, bis(4-methoxycarbonyl-2-nitrophenyl)disulfide, bis(4-methoxycarbonyl-2-aminophenyl)disulfide, bis(4-methoxycarbonyl-2-hydroxyphenyl)disulfide, bis(4-methoxycarbonyl-2-phenylthiophenyl)disulfide, bis(4-formyl-2-nitrophenyl)disulfide, bis(4-formyl-2-aminophenyl)disulfide, bis(4-formyl-2-hydroxyphenyl)disulfide, bis(4-formyl-2-phenylthiophenyl)disulfide, bis(4-acetyl-2-nitrophenyl)disulfide, bis(4-acetyl-2-aminophenyl)disulfide, bis(4-acetyl-2-hydroxyphenyl)disulfide, bis(4-acetyl-2-phenylthiophenyl)disulfide, bis(4-chlorocarbonyl-2-nitrophenyl)disulfide, bis(4-chlorocarbonyl-2-aminophenyl)disulfide, bis(4-chlorocarbonyl-2-hydroxyphenyl)disulfide, bis(4-chlorocarbonyl-2-phenylthiophenyl)disulfide, bis(4-sulfo-2-nitrophenyl)disulfide, bis(4-sulfo-2-aminophenyl)disulfide, bis(4-sulfo-2-hydroxyphenyl)disulfide, bis(4-sulfo-2-phenylthiophenyl)disulfide, bis(4-methoxysulfonyl-2-nitrophenyl)disulfide, bis(4-methoxysulfonyl-2-aminophenyl)disulfide, bis(4-methoxysulfonyl-2-hydroxyphenyl)disulfide, bis(4-methoxysulfonyl-2-phenylthiophenyl)disulfide, bis(4-chlorosulfonyl-2-nitrophenyl)disulfide, bis(4-chlorosulfonyl-2-aminophenyl)disulfide, bis(4-chlorosulfonyl-2-hydroxyphenyl)disulfide, bis(4-chlorosulfonyl-2-phenylthiophenyl)disulfide, bis(4-sulfino-2-nitrophenyl)disulfide, bis(4-sulfino-2-aminophenyl)disulfide, bis(4-sulfino-2-hydroxyphenyl)disulfide, bis(4-sulfino-2-phenylthiophenyl)disulfide, bis(4-methylsulfinyl-2-nitrophenyl)disulfide, bis(4-methylsulfinyl-2-aminophenyl)disulfide, bis(4-methylsulfinyl-2-hydroxyphenyl)disulfide, bis(4-methylsulfinyl-2-phenylthiophenyl)disulfide, bis(4-carbamoyl-2-nitrophenyl)disulfide, bis(4-carbamoyl-2-aminophenyl)disulfide, bis(4-carbamoyl-2-hydroxyphenyl)disulfide, bis(4-carbamoyl-2-phenylthiophenyl)disulfide, bis(4-trichloromethyl-2-nitrophenyl)disulfide, bis(4-trichloromethyl-2-aminophenyl)disulfide, bis(4-trichloromethyl-2-hydroxyphenyl)disulfide, bis(4-trichloromethyl-2-phenylthiophenyl)disulfide, bis(4-cyano-2-nitrophenyl)disulfide, bis(4-cyano-2-aminophenyl)disulfide, bis(4-cyano-2-hydroxyphenyl)disulfide, bis(4-cyano-2-phenylthiophenyl)disulfide, bis(4-methoxy-2-nitrophenyl)disulfide, bis(4-methoxy-2-aminophenyl)disulfide, bis(4-methoxy-2-hydroxyphenyl)disulfide, and bis(4-methoxy-2-phenylthiophenyl)disulfide.

Still another example of the organic sulfur compound (1e) represented by the chemical formula (2) is a compound substituted with two or more types of substituents. Specific examples of the compound include bis(4-acetyl-2-chlorophenyl)disulfide, bis(4-acetyl-2-methylphenyl)disulfide, bis(4-acetyl-2-carboxyphenyl)disulfide, bis(4-acetyl-2-methoxycarbonylphenyl)disulfide, bis(4-acetyl-2-formylphenyl)disulfide, bis(4-acetyl-2-chlorocarbonylphenyl)disulfide, bis(4-acetyl-2-sulfophenyl)disulfide, bis(4-acetyl-2-methoxysulfonylphenyl)disulfide, bis(4-acetyl-2-chlorosulfonylphenyl)disulfide, bis(4-acetyl-2-sulfinophenyl)disulfide, bis(4-acetyl-2-methylsulfinylphenyl)disulfide, bis(4-acetyl-2-carbamoylphenyl)disulfide, bis(4-acetyl-2-trichloromethylphenyl)disulfide, bis(4-acetyl-2-cyanophenyl)disulfide, and bis(4-acetyl-2-methoxyphenyl)disulfide.

Examples of the organic sulfur compound (1e) represented by the chemical formula (3) include thiophenol sodium salt; thiophenol sodium salts substituted with halogen groups, such as 4-fluorothiophenol sodium salt, 2,5-difluorothiophenol sodium salt, 2,4,5-trifluorothiophenol sodium salt, 2,4,5,6-tetrafluorothiophenol sodium salt, pentafluorothiophenol sodium salt, 4-chlorothiophenol sodium salt, 2,5-dichlorothiophenol sodium salt, 2,4,5-trichlorothiophenol sodium salt, 2,4,5,6-tetrachlorothiophenol sodium salt, pentachlorothiophenol sodium salt, 4-bromothiophenol sodium salt, 2,5-dibromothiophenol sodium salt, 2,4,5-tribromothiophenol sodium salt, 2,4,5,6-tetrabromothiophenol sodium salt, pentabromothiophenol sodium salt, 4-iodothiophenol sodium salt, 2,5-diiodothiophenol sodium salt, 2,4,5-triiodothiophenol sodium salt, 2,4,5,6-tetraiodothiophenol sodium salt, and pentaiodothiophenol sodium salt; thiophenol sodium salts substituted with alkyl groups, such as 4-methylthiophenol sodium salt, 2,4,5-trimethylthiophenol sodium salt, pentamethylthiophenol sodium salt, 4-t-butylthiophenol sodium salt, 2,4,5-tri-t-butylthiophenol sodium salt, and penta(t-butyl)thiophenol sodium salt; thiophenol sodium salts substituted with carboxyl groups, such as 4-carboxythiophenol sodium salt, 2,4,6-tricarboxythiophenol sodium salt, and pentacarboxythiophenol sodium salt; thiophenol sodium salts substituted with alkoxycarbonyl groups, such as 4-methoxycarbonylthiophenol sodium salt, 2,4,6-trimethoxycarbonylthiophenol sodium salt, and pentamethoxycarbonylthiophenol sodium salt; thiophenol sodium salts substituted with formyl groups, such as 4-formylthiophenol sodium salt, 2,4,6-triformylthiophenol sodium salt, and pentaformylthiophenol sodium salt; thiophenol sodium salts substituted with acyl groups, such as 4-acetylthiophenol sodium salt, 2,4,6-triacetylthiophenol sodium salt, and pentaacetylthiophenol sodium salt; thiophenol sodium salts substituted with carbonyl halide groups, such as 4-chlorocarbonylthiophenol sodium salt, 2,4,6-tri(chlorocarbonyl)thiophenol sodium salt, and penta(chlorocarbonyl)thiophenolsodiumsalt; thiophenol sodium salts substituted with sulfo groups, such as 4-sulfothiophenol sodium salt, 2,4,6-trisulfothiophenol sodium salt, and pentasulfothiophenol sodium salt; thiophenol sodium salts substituted with alkoxysulfonyl groups, such as 4-methoxysulfonylthiophenol sodium salt, 2,4,6-trimethoxysulfonylthiophenol sodium salt, and pentamethoxysulfonylthiophenol sodium salt; thiophenol sodium salts substituted with sulfonyl halide groups, such as 4-chlorosulfonylthiophenol sodium salt, 2,4,6-tri(chlorosulfonyl)thiophenol sodium salt, and penta(chlorosulfonyl)thiophenolsodiumsalt;thiophenolsodium salts substituted with sulfino groups, such as 4-sulfinothiophenol sodium salt, 2,4,6-trisulfinothiophenol sodium salt, and pentasulfinothiophenol sodium salt; thiophenol sodium salts substituted with alkylsulfinyl groups, such as 4-methylsulfinylthiophenol sodium salt, 2,4,6-tri(methylsulfinyl)thiophenol sodium salt, and penta(methylsulfinyl)thiophenolsodiumsalt; thiophenolsodium salts substituted with carbamoyl groups, such as 4-carbamoylthiophenol sodium salt, 2,4,6-tricarbamoylthiophenol sodium salt, and pentacarbamoylthiophenol sodium salt; thiophenol sodium salts substituted with alkyl halide groups, such as 4-trichloromethylthiophenol sodium salt, 2,4,6-tri(trichloromethyl)thiophenol sodium salt, and penta(trichloromethyl)thiophenol sodium salt; thiophenol sodium salts substituted with cyano groups, such as 4-cyanothiophenol sodium salt,2,4,6-tricyanothiophenol sodium salt, and pentacyanothiophenol sodium salt; and thiophenol sodium salts substituted with alkoxy groups, such as 4-methoxythiophenol sodium salt, 2,4,6-trimethoxythiophenol sodium salt, and pentamethoxythiophenol sodium salt. Each of these thiophenol sodium salts is substituted with one type of substituent.

Another example of the organic sulfur compound (1e) represented by the chemical formula (3) is a compound substituted with at least one type of the above substituents and another substituent. Examples of the other substituent include a nitro group (-$NO_2$), an amino group (-$NH_2$), a hydroxyl group (-OH), and a phenylthio group (-SPh). Specific examples of the compound include 4-chloro-2-nitrothiophenol sodium salt, 4-chloro-2-aminothiophenol sodium salt, 4-chloro-2-hydroxythiophenol sodium salt, 4-chloro-2-phenylthiothiophenol sodium salt, 4-methyl-2-nitrothiophenol sodium salt, 4-methyl-2-aminothiophenol sodium salt, 4-methyl-2-hydroxythiophenol sodium salt, 4-methyl-2-phenylthiothiophenol sodium salt, 4-carboxy-2-nitrothiophenol sodium salt, 4-carboxy-2-aminothiophenol sodium salt, 4-carboxy-2-hydroxythiophenol sodium salt, 4-carboxy-2-phenylthiothiophenol sodium salt, 4-methoxycarbonyl-2-nitrothiophenol sodium salt, 4-methoxycarbonyl-2-aminothiophenol sodium salt, 4-methoxycarbonyl-2-hydroxythiophenol sodium salt, 4-methoxycarbonyl-2-phenylthiothiophenol sodium salt, 4-formyl-2-nitrothiophenol sodium salt, 4-formyl-2-aminothiophenol sodium salt, 4-formyl-2-hydroxythiophenol sodium salt, 4-formyl-2-phenylthiothiophenol sodium salt, 4-acetyl-2-nitrothiophenol sodium salt, 4-acetyl-2-aminothiophenol sodium salt, 4-acetyl-2-hydroxythiophenol sodium salt, 4-acetyl-2-phenylthiothiophenol sodium salt, 4-chlorocarbonyl-2-nitrothiophenol sodium salt, 4-chlorocarbonyl-2-aminothiophenol sodium salt, 4-chlorocarbonyl-2-hydroxythiophenol sodium salt, 4-chlorocarbonyl-2-phenylthiothiophenol sodium salt, 4-sulfo-2-nitrothiophenol sodium salt, 4-sulfo-2-aminothiophenol sodium salt, 4-sulfo-2-hydroxythiophenol sodium salt, 4-sulfo-2-phenylthiothiophenol sodium salt, 4-methoxysulfonyl-2-nitrothiophenol sodium salt, 4-methoxysulfonyl-2-aminothiophenol sodium salt, 4-methoxysulfonyl-2-hydroxythiophenol sodium salt, 4-methoxysulfonyl-2-phenylthiothiophenol sodium salt, 4-chlorosulfonyl-2-nitrothiophenol sodium salt, 4-chlorosulfonyl-2-aminothiophenol sodium salt, 4-chlorosulfonyl-2-hydroxythiophenol sodium salt, 4-chlorosulfonyl-2-phenylthiothiophenol sodium salt, 4-sulfino-2-nitrothiophenol sodium salt, 4-sulfino-2-aminothiophenol sodium salt, 4-sulfino-2-hydroxythiophenol sodium salt, 4-sulfino-2-phenylthiothiophenol sodium salt, 4-methylsulfinyl-2-nitrothiophenol sodium salt, 4-methylsulfinyl-2-aminothiophenol sodium salt, 4-methylsulfinyl-2-hydroxythiophenol sodium salt, 4-methylsulfinyl-2-phenylthiothiophenol sodium salt, 4-carbamoyl-2-nitrothiophenol sodium salt, 4-carbamoyl-2-aminothiophenol sodium salt, 4-carbamoyl-2-hydroxythiophenol sodium salt, 4-carbamoyl-2-phenylthiothiophenol sodium salt, 4-trichloromethyl-2-nitrothiophenol sodium salt, 4-trichloromethyl-2-aminothiophenol sodium salt, 4-trichloromethyl-2-hydroxythiophenol sodium salt, 4-trichloromethyl-2-phenylthiothiophenol sodium salt, 4-cyano-2-nitrothiophenol sodium salt, 4-cyano-2-aminothiophenol sodium salt, 4-cyano-2-hydroxythiophenol sodium salt, 4-cyano-2-phenylthiothiophenol sodium salt, 4-methoxy-2-nitrothiophenol sodium salt, 4-methoxy-2-aminothiophenol sodium salt, 4-methoxy-2-hydroxythiophenol sodium salt, and 4-methoxy-2-phenylthiothiophenol sodium salt.

Still another example of the organic sulfur compound (1e) represented by the chemical formula (3) is a compound substituted with two or more types of substituents. Specific examples of the compound include 4-acetyl-2-chlorothiophenol sodium salt, 4-acetyl-2-methylthiophenol sodium salt, 4-acetyl-2-carboxythiophenol sodium salt, 4-acetyl-2-methoxycarbonylthiophenol sodium salt, 4-acetyl-2-formylthiophenol sodium salt, 4-acetyl-2-chlorocarbonylthiophenol sodium salt, 4-acetyl-2-sulfothiophenol sodium salt, 4-acetyl-2-methoxysulfonylthiophenol sodium salt, 4-acetyl-2-chlorosulfonylthiophenol sodium salt, 4-acetyl-2-sulfinothiophenol sodium salt, 4-acetyl-2-methylsulfinylthiophenol sodium salt, 4-acetyl-2-carbamoylthiophenol sodium salt, 4-acetyl-2-trichloromethylthiophenol sodium salt, 4-acetyl-2-cyanothiophenol sodium salt, and 4-acetyl-2-methoxythiophenol sodium salt. Examples of the monovalent metal represented by M1 in the chemical formula (3) include sodium, lithium, potassium, copper (I), and silver (I). Examples of the organic sulfur compound (1e) represented by the chemical formula (4) include thiophenol zinc salt; thiophenol zinc salts substituted with halogen groups, such as 4-fluorothiophenol zinc salt, 2,5-difluorothiophenol zinc salt, 2,4,5-trifluorothiophenol zinc salt, 2,4,5,6-tetrafluorothiophenol zinc salt, pentafluorothiophenolzinc salt, 4-chlorothiophenol zinc salt, 2,5-dichlorothiophenol zinc salt, 2,4,5-trichlorothiophenol zinc salt, 2,4,5,6-tetrachlorothiophenol zinc salt, pentachlorothiophenol zinc salt, 4-bromothiophenol zinc salt, 2,5-dibromothiophenol zinc salt, 2,4,5-tribromothiophenol zinc salt, 2,4,5,6-tetrabromothiophenol zinc salt, pentabromothiophenol zinc salt, 4-iodothiophenol zinc salt, 2,5-diiodothiophenol zinc salt, 2,4,5-triiodothiophenol zinc salt, 2,4,5,6-tetraiodothiophenol zinc salt, and pentaiodothiophenol zinc salt; thiophenol zinc salts substituted with alkyl groups, such as 4-methylthiophenol zinc salt, 2,4,5-trimethylthiophenol zinc salt, pentamethylthiophenol zinc salt, 4-t-butylthiophenol zinc salt, 2,4,5-tri-t-butylthiophenol zinc salt, and penta-t-butylthiophenol zinc salt; thiophenol zinc salts substituted with carboxyl groups, such as 4-carboxythiophenol zinc salt, 2,4,6-tricarboxythiophenol zinc salt, and pentacarboxythiophenol zinc salt; thiophenol zinc salts substituted with alkoxycarbonyl groups, such as 4-methoxycarbonylthiophenol zinc salt, 2,4,6-trimethoxycarbonylthiophenol zinc salt, and pentamethoxycarbonylthiophenol zinc salt; thiophenol zinc salts substituted with formyl groups, such as 4-formylthiophenol zinc salt, 2,4,6-triformylthiophenol zinc salt, and pentaformylthiophenol zinc salt; thiophenol zinc salts substituted with acyl groups, such as 4-acetylthiophenol zinc salt, 2,4,6-triacetylthiophenol zinc salt, and pentaacetylthiophenol zinc salt; thiophenol zinc salts substituted with carbonyl halide groups, such as 4-chlorocarbonylthiophenol zinc salt, 2,4,6-tri(chlorocarbonyl)thiophenol zinc salt, and penta(chlorocarbonyl)thiophenol zinc salt; thiophenol zinc salts substituted with sulfo groups, such as 4-sulfothiophenol zinc salt, 2,4,6-trisulfothiophenol zinc salt, and pentasulfothiophenol zinc salt; thiophenol zinc salts substituted with alkoxysulfonyl groups, such as 4-methoxysulfonylthiophenol zinc salt, 2,4,6-trimethoxysulfonylthiophenol zinc salt, and pentamethoxysulfonylthiophenol zinc salt; thiophenol zinc salts substituted with sulfonyl halide

groups, such as 4-chlorosulfonylthiophenol zinc salt, 2,4,6-tri(chlorosulfonyl)thiophenol zinc salt, and penta(chlorosulfonyl)thiophenol zinc salt; thiophenol zinc salts substituted with sulfino groups, such as 4-sulfinothiophenol zinc salt, 2,4,6-trisulfinothiophenol zinc salt, and pentasulfinothiophenol zinc salt; thiophenol zinc salts substituted with alkylsulfinyl groups, such as 4-methylsulfinylthiophenol zinc salt, 2,4,6-tri(methylsulfinyl)thiophenol zinc salt, and penta(methylsulfinyl)thiophenol zinc salt; thiophenol zinc salts substituted with carbamoyl groups, such as 4-carbamoylthiophenol zinc salt, 2,4,6-tricarbamoylthiophenol zinc salt, and pentacarbamoylthiophenol zinc salt; thiophenol zinc salts substituted with alkyl halide groups, such as 4-trichloromethylthiophenol zinc salt, 2,4,6-tri(trichloromethyl)thiophenol zinc salt, and penta(trichloromethyl)thiophenol zinc salt; thiophenol zinc salts substituted with cyano groups, such as 4-cyanothiophenol zinc salt, 2,4,6-tricyanothiophenol zinc salt, and pentacyanothiophenol zinc salt; and thiophenol zinc salts substituted with alkoxy groups, such as 4-methoxythiophenol zinc salt, 2,4,6-trimethoxythiophenol zinc salt, and pentamethoxythiophenol zinc salt. Each of these thiophenol zinc salts is substituted with one type of substituent.

Another example of the organic sulfur compound (1e) represented by the chemical formula (4) is a compound substituted with at least one type of the above substituents and another substituent. Examples of the other substituent include a nitro group ($-NO_2$), an amino group ($-NH_2$), a hydroxyl group (-OH), and a phenylthio group (-SPh). Specific examples of the compound include 4-chloro-2-nitrothiophenol zinc salt, 4-chloro-2-aminothiophenol zinc salt, 4-chloro-2-hydroxythiophenol zinc salt, 4-chloro-2-phenylthiothiophenol zinc salt, 4-methyl-2-nitrothiophenol zinc salt, 4-methyl-2-aminothiophenol zinc salt, 4-methyl-2-hydroxythiophenol zinc salt, 4-methyl-2-phenylthiothiophenol zinc salt, 4-carboxy-2-nitrothiophenol zinc salt, 4-carboxy-2-aminothiophenol zinc salt, 4-carboxy-2-hydroxythiophenol zinc salt, 4-carboxy-2-phenylthiothiophenol zinc salt, 4-methoxycarbonyl-2-nitrothiophenol zinc salt, 4-methoxycarbonyl-2-aminothiophenol zinc salt, 4-methoxycarbonyl-2-hydroxythiophenol zinc salt, 4-methoxycarbonyl-2-phenylthiothiophenol zinc salt, 4-formyl-2-nitrothiophenol zinc salt, 4-formyl-2-aminothiophenol zinc salt, 4-formyl-2-hydroxythiophenol zinc salt, 4-formyl-2-phenylthiothiophenol zinc salt, 4-acetyl-2-nitrothiophenol zinc salt, 4-acetyl-2-aminothiophenol zinc salt, 4-acetyl-2-hydroxythiophenol zinc salt, 4-acetyl-2-phenylthiothiophenol zinc salt, 4-chlorocarbonyl-2-nitrothiophenol zinc salt, 4-chlorocarbonyl-2-aminothiophenol zinc salt, 4-chlorocarbonyl-2-hydroxythiophenol zinc salt, 4-chlorocarbonyl-2-phenylthiothiophenol zinc salt, 4-sulfo-2-nitrothiophenol zinc salt, 4-sulfo-2-aminothiophenol zinc salt, 4-sulfo-2-hydroxythiophenol zinc salt, 4-sulfo-2-phenylthiothiophenol zinc salt, 4-methoxysulfonyl-2-nitrothiophenol zinc salt, 4-methoxysulfonyl-2-aminothiophenol zinc salt, 4-methoxysulfonyl-2-hydroxythiophenol zinc salt, 4-methoxysulfonyl-2-phenylthiothiophenol zinc salt, 4-chlorosulfonyl-2-nitrothiophenol zinc salt, 4-chlorosulfonyl-2-aminothiophenol zinc salt, 4-chlorosulfonyl-2-hydroxythiophenol zinc salt, 4-chlorosulfonyl-2-phenylthiothiophenol zinc salt, 4-sulfino-2-nitrothiophenol zinc salt, 4-sulfino-2-aminothiophenol zinc salt, 4-sulfino-2-hydroxythiophenol zinc salt, 4-sulfino-2-phenylthiothiophenol zinc salt, 4-methylsulfinyl-2-nitrothiophenol zinc salt, 4-methylsulfinyl-2-aminothiophenol zinc salt, 4-methylsulfinyl-2-hydroxythiophenol zinc salt, 4-methylsulfinyl-2-phenylthiothiophenol zinc salt, 4-carbamoyl-2-nitrothiophenol zinc salt, 4-carbamoyl-2-aminothiophenol zinc salt, 4-carbamoyl-2-hydroxythiophenol zinc salt, 4-carbamoyl-2-phenylthiothiophenol zinc salt, 4-trichloromethyl-2-nitrothiophenol zinc salt, 4-trichloromethyl-2-aminothiophenol zinc salt, 4-trichloromethyl-2-hydroxythiophenol zinc salt, 4-trichloromethyl-2-phenylthiothiophenol zinc salt, 4-cyano-2-nitrothiophenol zinc salt, 4-cyano-2-aminothiophenol zinc salt, 4-cyano-2-hydroxythiophenol zinc salt, 4-cyano-2-phenylthiothiophenol zinc salt, 4-methoxy-2-nitrothiophenol zinc salt, 4-methoxy-2-aminothiophenol zinc salt, 4-methoxy-2-hydroxythiophenol zinc salt, and 4-methoxy-2-phenylthiothiophenol zinc salt.

Still another example of the organic sulfur compound (1e) represented by the chemical formula (4) is a compound substituted with two or more types of substituents. Specific examples of the compound include 4-acetyl-2-chlorothiophenol zinc salt, 4-acetyl-2-methylthiophenol zinc salt, 4-acetyl-2-carboxythiophenol zinc salt, 4-acetyl-2-methoxycarbonylthiophenol zinc salt, 4-acetyl-2-formylthiophenol zinc salt, 4-acetyl-2-chlorocarbonylthiophenol zinc salt, 4-acetyl-2-sulfothiophenol zinc salt, 4-acetyl-2-methoxysulfonylthiophenol zinc salt, 4-acetyl-2-chlorosulfonylthiophenol zinc salt, 4-acetyl-2-sulfinothiophenol zinc salt, 4-acetyl-2-methylsulfinylthiophenol zinc salt, 4-acetyl-2-carbamoylthiophenol zinc salt, 4-acetyl-2-trichloromethylthiophenol zinc salt, 4-acetyl-2-cyanothiophenol zinc salt, and 4-acetyl-2-methoxythiophenol zinc salt. Examples of the bivalent metal represented by M2 in the chemical formula (4) include zinc, magnesium, calcium, strontium, barium, titanium (II), manganese (II), iron (II), cobalt (II), nickel (II), zirconium (II), and tin (II).

Examples of thionaphthols include 2-thionaphthol, 1-thionaphthol, 2-chloro-1-thionaphthol, 2-bromo-1-thionaphthol, 2-fluoro-1-thionaphthol, 2-cyano-1-thionaphthol, 2-acetyl-1-thionaphthol, 1-chloro-2-thionaphthol, 1-bromo-2-thionaphthol, 1-fluoro-2-thionaphthol, 1-cyano-2-thionaphthol, 1-acetyl-2-thionaphthol, and metal salts thereof. 1-thionaphthol, 2-thionaphthol, and zinc salts thereof are preferred.

Examples of sulfenamide type organic sulfur compounds (1e) include N-cyclohexyl-2-benzothiazole sulfenamide, N-oxydiethylene-2-benzothiazole sulfenamide, and N-t-butyl-2-benzothiazole sulfenamide. Examples of thiuram type organic sulfur compounds include tetramethylthiuram monosulfide, tetramethylthiuram disulfide, tetraethylthiuram disulfide, tetrabutylthiuram disulfide, and dipentamethylenethiuram tetrasulfide. Examples of dithiocarbamates include zinc dimethyldithiocarbamate, zinc diethyldithiocarbamate, zinc dibutyldithiocarbamate, zinc ethylphenyldithiocarbamate, sodium dimethyldithiocarbamate, sodium diethyldithiocarbamate, copper (II) dimethyldithiocarbamate, iron (III) dimethyldithiocarbamate, selenium diethyldithiocarbamate, and tellurium diethyldithiocarbamate. Examples of thiazole

type organic sulfur compounds include 2-mercaptobenzothiazole (MBT); dibenzothiazyl disulfide (MBTS); a sodium salt, a zinc salt, a copper salt, or a cyclohexylamine salt of 2-mercaptobenzothiazole; 2-(2,4-dinitrophenyl)mercaptobenzothiazole; and 2-(2,6-diethyl-4-morpholinothio)benzothiazole.

Preferable organic sulfur compounds (1e) from the standpoint that an outer-hard/inner-soft structure is easily obtained are 2-thionaphthol, bis (pentabromophenyl) disulfide, and 2,6-dichlorothiophenol. A more preferable organic sulfur compound (1e) is 2-thionaphthol.

From the standpoint that an outer-hard/inner-soft structure is easily obtained, the amount of the organic sulfur compound (1e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a fillermaybe included in the first envelope layer 18. Examples of suitable fillers include zinc oxide, barium sulfate, calcium carbonate, and magnesium carbonate. The amount of the filler is determined as appropriate so that the intended specific gravity of the core 4 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the first rubber composition of the first envelope layer 18. Crosslinked rubber powder or synthetic resin powder may also be dispersed in the first rubber composition.

The second envelope layer 20 is formed by crosslinking a second rubber composition. The second rubber composition includes:

(2a) a base rubber;
(2b) a co-crosslinking agent;
(2c) a crosslinking initiator; and
(2d) an acid and/or a salt.

Examples of the base rubber (2a) include polybutadienes, polyisoprenes, styrene-butadiene copolymers, ethylene-propylene-diene copolymers, and natural rubbers. In light of resilience performance, polybutadienes are preferred. When a polybutadiene and another rubber are used in combination, it is preferred that the polybutadiene is included as a principal component. Specifically, the proportion of the polybutadiene to the entire base rubber is preferably equal to or greater than 50% by weight and more preferably equal to or greater than 80% by weight. The proportion of cis-1,4 bonds in the polybutadiene is preferably equal to or greater than 40% by weight and more preferably equal to or greater than 80% by weight.

A polybutadiene in which the proportion of 1, 2-vinyl bonds is equal to or less than 2.0% by weight is preferred. The polybutadiene can contribute to the resilience performance of the golf ball 2. In this respect, the proportion of 1,2-vinyl bonds is preferably equal to or less than 1.7% by weight and particularly preferably equal to or less than 1.5% by weight.

From the standpoint that a polybutadiene having a low proportion of 1,2-vinyl bonds and excellent polymerization activity is obtained, a rare-earth-element-containing catalyst is preferably used for synthesis of a polybutadiene. In particular, a polybutadiene synthesized with a catalyst containing neodymium, which is a lanthanum-series rare earth element compound, is preferred.

The polybutadiene has a Mooney viscosity ($ML_{1+4}$(100°C)) of preferably 30 or greater, more preferably 32 or greater, and particularly preferably 35 or greater. The Mooney viscosity ($ML_{1+4}$(100°C)) is preferably equal to or less than 140, more preferably equal to or less than 120, even more preferably equal to or less than 100, and particularly preferably equal to or less than 80. The Mooney viscosity ($ML_{1+4}$(100°C)) is measured according to the standards of "JIS K6300". The measurement conditions are as follows.
Rotor: L rotor
Preheating time: 1 minute
Rotating time of rotor: 4 minutes
Temperature: 100°C

In light of workability, the polybutadiene has a molecular weight distribution (Mw/Mn) of preferably 2.0 or greater, more preferably 2.2 or greater, even more preferably 2.4 or greater, and particularly preferably 2.6 or greater. In light of resilience performance, the molecular weight distribution (Mw/Mn) is preferably equal to or less than 6.0, more preferably equal to or less than 5.0, even more preferably equal to or less than 4.0, and particularly preferably equal to or less than 3.4. The molecular weight distribution (Mw/Mn) is calculated by dividing the weight average molecular weight Mw by the number average molecular weight Mn.

The molecular weight distribution is measured by gel permeation chromatography ("HLC-8120GPC" manufactured by Tosoh Corporation). The measurement conditions are as follows.
Detector: differential refractometer
Column: GMHHXL (manufactured by Tosoh Corporation)
Column temperature: 40°C
Mobile phase: tetrahydrofuran The molecular weight distribution is calculated as a value obtained by conversion using polystyrene standard.

The co-crosslinking agent (2b) is:

(2b-1) an α,β-unsaturated carboxylic acid having 3 to 8 carbon atoms; and/or
(2b-2) a metal salt of an α,β-unsaturated carboxylic acid having 3 to 8 carbon atoms.

The second rubber composition may include only the α,β-unsaturated carboxylic acid (2b-1) or only the metal salt (2b-2) of the α,β-unsaturated carboxylic acid as the co-crosslinking agent (2b). The second rubber composition may include both the α, β-unsaturated carboxylic acid (2b-1) and the metal salt (2b-2) of the α, β-unsaturated carboxylic acid as the co-crosslinking agent (2b).

The metal salt (2b-2) of the α, β-unsaturated carboxylic acid graft-polymerizes with the molecular chain of the base rubber, thereby crosslinking the rubber molecules. When the second rubber composition includes the α, β-unsaturated carboxylic acid (2b-1), the second rubber composition preferably further includes a metal compound (2f). The metal compound (2f) reacts with the α, β-unsaturated carboxylic acid (2b-1) in the second rubber composition. A salt obtained by this reaction graft-polymerizes with the molecular chain of the base rubber.

Examples of the metal compound (2f) include metal hydroxides such as magnesium hydroxide, zinc hydroxide, calcium hydroxide, sodium hydroxide, lithium hydroxide, potassium hydroxide, and copper hydroxide; metal oxides such as magnesium oxide, calcium oxide, zinc oxide, and copper oxide; and metal carbonates such as magnesium carbonate, zinc carbonate, calcium carbonate, sodium carbonate, lithium carbonate, and potassium carbonate. A compound that includes a bivalent metal is preferred. The compound that includes the bivalent metal reacts with the co-crosslinking agent (2b) to form metal crosslinks. The metal compound (2f) is particularly preferably a zinc compound. Two or more metal compounds may be used in combination.

Examples of the α, β-unsaturated carboxylic acids include acrylic acid, methacrylic acid, fumaric acid, maleic acid, and crotonic acid. Examples of the metal component in the metal salt (2b-2) of the α, β-unsaturated carboxylic acid include sodium ion, potassium ion, lithium ion, magnesium ion, calcium ion, zinc ion, barium ion, cadmium ion, aluminum ion, tin ion, and zirconium ion. The metal salt (2b-2) of the α, β-unsaturated carboxylic acid may include two or more types of ions. From the standpoint that metal crosslinks are likely to occur between the rubber molecules, bivalent metal ions such as magnesium ion, calcium ion, zinc ion, barium ion, and cadmium ion are preferred. The metal salt (2b-2) of the α, β-unsaturated carboxylic acid is particularly preferably zinc acrylate.

In light of resilience performance of the golf ball 2, the amount of the co-crosslinking agent (2b) is preferably equal to or greater than 15 parts by weight and particularly preferably equal to or greater than 20 parts by weight, per 100 parts by weight of the base rubber. In light of feel at impact, the amount is preferably equal to or less than 50 parts by weight, more preferably equal to or less than 45 parts by weight, and particularly preferably equal to or less than 40 parts by weight, per 100 parts by weight of the base rubber.

In the golf ball 2, the amount of the co-crosslinking agent (2b) in the second envelope layer 20 is preferably equal to the amount of the co-crosslinking agent (1b) in the first envelope layer 18, or greater than the amount of the co-crosslinking agent (1b) in the first envelope layer 18. Thus, the degree of the outer-hard/inner-soft structure of the core 4 is increased. In this respect, the difference between the amount of the co-crosslinking agent (2b) in the second envelope layer 20 and the amount of the co-crosslinking agent (1b) in the first envelope layer 18 is preferably equal to or greater than 0 parts by weight and more preferably equal to or greater than 1 parts by weight. From the standpoint that the core 4 whose hardness linearly increases from its central point toward its surface is obtained, the difference of the amount is preferably equal to or less than 20 parts by weight and more preferably equal to or less than 15 parts by weight. In the golf ball 2, spin is effectively suppressed when the golf ball 2 is hit with a driver. The golf ball 2 has excellent flight performance.

The crosslinking initiator (2c) is preferably an organic peroxide. The organic peroxide contributes to the resilience performance of the golf ball 2. Examples of preferable organic peroxides include dicumyl peroxide, 1,1-bis(t-butylperoxy)-3,3,5-trimethylcyclohexane, 2,5-dimethyl-2,5-di(t-butylperoxy)hexane, and di-t-butyl peroxide. In light of versatility, dicumyl peroxide is preferred.

In light of resilience performance of the golf ball 2, the amount of the crosslinking initiator (2c) is preferably equal to or greater than 0.2 parts by weight and particularly preferably equal to or greater than 0.5 parts by weight, per 100 parts by weight of the base rubber. In light of feel at impact and durability of the golf ball 2, the amount is preferably equal to or less than 5.0 parts by weight and particularly preferably equal to or less than 2.5 parts by weight, per 100 parts by weight of the base rubber.

In the present invention, the co-crosslinking agent (2b) is not included in the concept of the acid and/or the salt (2d). It is inferred that as described later, during heating and forming of the core 4, the acid and/or the salt (2d) breaks the metal crosslinks by the co-crosslinking agent (2b).

Examples of the acid and/or the salt (2d) include oxo acids, such as carboxylic acids, sulfonic acids, and phosphoric acid, and salts thereof; and hydroacids, such as hydrochloric acid and hydrofluoric acid, and salts thereof. Oxo acids and salts thereof are preferred. A carboxylic acid and/or a salt thereof (2d-1) is preferred. Carboxylates are particularly preferred.

The carboxylic acid component of the carboxylic acid and/or the salt thereof (2d-1) has a carboxyl group. The carboxylic acid component reacts with the co-crosslinking agent (2b). It is inferred that by this reaction, metal crosslinks are broken.

The carbon number of the carboxylic acid component of the carboxylic acid and/or the salt thereof (2d-1) is preferably equal to or greater than 1 but equal to or less than 30, more preferably equal to or greater than 3 but equal to or less than 30, and even more preferably equal to or greater than 5 but equal to or less than 28. Examples of the carboxylic acid include aliphatic carboxylic acids (fatty acids) and aromatic carboxylic acids. A fatty acid and/or a salt thereof is preferred. The carbon number of the fatty acid component of the fatty acid and/or the salt thereof is preferably equal to or greater than 1 but equal to or less than 30.

The second rubber composition may include a saturated fatty acid and/or a salt thereof, or may include an unsaturated fatty acid and/or a salt thereof. The saturated fatty acid and/or the salt thereof are preferred.

Examples of fatty acids include butyric acid (C4), valeric acid (C5), caproic acid (C6), enanthic acid (C7), caprylic acid (octanoic acid) (C8), pelargonicacid (C9), capric acid (decanoic acid) (C10), lauric acid (C12), myristic acid (C14), myristoleic acid (C14), pentadecylic acid (C15), palmitic acid (C16), palmitoleic acid (C16), margaric acid (C17), stearic acid (C18), elaidic acid (C18), vaccenic acid (C18), oleic acid (C18), linolic acid (C18), linolenic acid (C18), 12-hydroxystearic acid (C18), arachidic acid (C20), gadoleic acid (C20), arachidonic acid (C20), eicosenoic acid (C20), behenic acid (C22), erucic acid (C22), lignoceric acid (C24), nervonic acid (C24), cerotic acid (C26), montanic acid (C28), and melissic acid (C30). Two or more fatty acids may be used in combination. Octanoic acid, lauric acid, myristic acid, palmitic acid, stearic acid, oleic acid, and behenic acid are preferred.

An aromatic carboxylic acid has an aromatic ring and a carboxyl group. Examples of aromatic carboxylic acids include benzoic acid, phthalic acid, isophthalic acid, terephthalic acid, hemimellitic acid (benzene-1,2,3-tricarboxylic acid), trimellitic acid (benzene-1,2,4-tricarboxylic acid), trimesic acid (benzene-1,3,5-tricarboxylic acid), mellophanic acid (benzene-1,2,3,4-tetracarboxylic acid), prehnitic acid (benzene-1,2,3,5-tetracarboxylic acid), pyromellitic acid (benzene-1,2,4,5-tetracarboxylic acid), mellitic acid (benzene hexacarboxylic acid), diphenic acid (biphenyl-2,2'-dicarboxylic acid), toluic acid (methylbenzoic acid), xylic acid, prehnitylic acid (2,3,4-trimethylbenzoic acid), γ-isodurylic acid (2,3,5-trimethylbenzoic acid), durylic acid (2,4,5-trimethylbenzoic acid), β-isodurylic acid (2,4,6-trimethylbenzoic acid), α-isodurylic acid (3,4,5-trimethylbenzoic acid), cuminic acid (4-isopropylbenzoic acid), uvitic acid (5-methylisophthalic acid), α-toluic acid (phenylacetic acid), hydratropic acid (2-phenylpropanoic acid), and hydrocinnamic acid (3-phenylpropanoic acid).

The second rubber composition may include an aromatic carboxylate substituted with a hydroxyl group, an alkoxy group, or an oxo group. Examples of this carboxylic acid can include salicylic acid (2-hydroxybenzoic acid), anisic acid (methoxybenzoic acid), cresotinic acid (hydroxy(methyl) benzoic acid), o-homosalicylic acid (2-hydroxy-3-methylbenzoic acid), m-homosalicylic acid (2-hydroxy-4-methylbenzoic acid), p-homosalicylic acid (2-hydroxy-5-methylbenzoic acid), o-pyrocatechuic acid (2,3-dihydroxybenzoic acid), β-resorcylic acid (2,4-dihydroxybenzoic acid), γ-resorcylic acid (2,6-dihydroxybenzoic acid), protocatechuic acid (3,4-dihydroxybenzoic acid), α-resorcylic acid (3,5-dihydroxybenzoic acid), vanillic acid (4-hydroxy-3-methoxybenzoic acid), isovanillic acid (3-hydroxy-4-methoxybenzoic acid), veratric acid (3,4-dimethoxybenzoic acid), o-veratric acid (2,3-dimethoxybenzoic acid), orsellinic acid (2,4-dihydroxy-6-methylbenzoic acid), m-hemipinic acid (4,5-dimethoxyphthalic acid), gallic acid (3,4,5-trihydroxybenzoic acid), syringic acid (4-hydroxy-3,5-dimethoxybenzoic acid), asaronic acid (2,4,5-trimethoxybenzoic acid), mandelic acid (hydroxy(phenyl)acetic acid), vanillylmandelic acid (hydroxy(4-hydroxy-3-methoxyphenyl)acetic acid), homoanisic acid ((4-methoxyphenyl)acetic acid), homogentisic acid ((2,5-dihydroxyphenyl)acetic acid), homoprotocatechuic acid ((3,4-dihydroxyphenyl)acetic acid), homovanillic acid ((4-hydroxy-3-methoxyphenyl)acetic acid), homoisovanillic acid ((3-hydroxy-4-methoxyphenyl)acetic acid), homoveratric acid ((3,4-dimethoxyphenyl)acetic acid), o-homoveratric acid ((2,3-dimethoxyphenyl)acetic acid), homophthalic acid (2-(carboxymethyl)benzoic acid), homoisophthalic acid (3-(carboxymethyl)benzoic acid), homoterephthalic acid (4-(carboxymethyl)benzoic acid), phthalonic acid (2-(carboxycarbonyl)benzoic acid), isophthalonic acid (3-(carboxycarbonyl)benzoic acid), terephthalonic acid (4-(carboxycarbonyl)benzoic acid), benzilic acid (hydroxydiphenylacetic acid), atrolactic acid (2-hydroxy-2-phenylpropanoic acid), tropic acid (3-hydroxy-2-phenylpropanoic acid), melilotic acid (3-(2-hydroxyphenyl)propanoic acid), phloretic acid (3-(4-hydroxyphenyl)propanoic acid), hydrocaffeic acid (3-(3,4-dihydroxyphenyl)propanoic acid), hydroferulic acid (3-(4-hydroxy-3-methoxyphenyl)propanoic acid), hydroisoferulic acid (3-(3-hydroxy-4-methoxyphenyl)propanoic acid), p-coumaric acid (3-(4-hydroxyphenyl)acrylic acid), umbellic acid (3-(2,4-dihydroxyphenyl)acrylic acid), caffeic acid (3-(3,4-dihydroxyphenyl)acrylic acid), ferulic acid (3-(4-hydroxy-3-methoxyphenyl)acrylic acid), isoferulic acid (3- (3-hydroxy-4-methoxyphenyl) acrylic acid), and sinapic acid (3-(4-hydroxy-3,5-dimethoxyphenyl)acrylic acid).

The cationic component of the carboxylate is a metal ion or an organic cation. Examples of the metal ion include sodium ion, potassium ion, lithium ion, silver ion, magnesium ion, calcium ion, zinc ion, barium ion, cadmium ion, copper ion, cobalt ion, nickel ion, manganese ion, aluminum ion, iron ion, tin ion, zirconium ion, and titanium ion. Two or more types of ions may be used in combination.

The organic cation is a cation having a carbon chain. Examples of the organic cation include organic ammonium ions. Examples of organic ammonium ions include primary ammonium ions such as stearylammonium ion, hexylammonium ion, octylammonium ion, and 2-ethylhexylammonium ion; secondary ammonium ions such as dodecyl (lauryl) ammonium ion, and octadecyl (stearyl) ammonium ion; tertiary ammonium ions such as trioctylammonium ion; and quaternary ammonium ions such as dioctyldimethylammonium ion, and distearyldimethylammonium ion. Two or more types of organic cations may be used in combination.

Examples of preferable carboxylates include a potassium salt, a magnesium salt, an aluminum salt, a zinc salt, an iron salt, a copper salt, a nickel salt, or a cobalt salt of octanoic acid, lauric acid, myristic acid, palmitic acid, stearic acid, oleic acid, or behenic acid. Zinc salts of carboxylic acids are particularly preferred. Specific examples of preferable carboxylates include zinc octoate, zinc laurate, zinc myristate, and zinc stearate. A particularly preferable carboxylate is zinc octoate.

In light of linearity of the hardness distribution of the core 4, the amount of the acid and/or the salt (2d) is preferably equal to or greater than 0.5 parts by weight, more preferably equal to or greater than 1.0 parts by weight, and particularly preferably equal to or greater than 2.0 parts by weight, per 100 parts by weight of the base rubber. In light of resilience performance, the amount is preferably equal to or less than 45 parts by weight, more preferably equal to or less than 40 parts by weight, and particularly preferably equal to or less than 30 parts by weight, per 100 parts by weight of the base rubber.

The weight ratio of the co-crosslinking agent (2b) and the acid and/or the salt (2d) in the second rubber composition is preferably equal to or greater than 3/7 but equal to or less than 9/1. From the second rubber composition in which this weight ratio is within the above range, the second envelope layer 20 whose hardness linearly increases from its inside toward its outside can be obtained.

As the co-crosslinking agent (2b), zinc acrylate is preferably used. Zinc acrylate whose surface is coated with stearic acid or zinc stearate for the purpose of improving dispersibility to rubber is present. In the present invention, when the second rubber composition includes this zinc acrylate, this coating material is not included in the concept of the acid and/or the salt (2d).

Preferably, the second rubber composition further includes an organic sulfur compound (2e). The organic sulfur compound (2e) increases the linearity of the hardness distribution of the core 4. In addition, the organic sulfur compound (2e) increases the degree of the outer-hard/inner-soft structure.

In the golf ball 2, the same compounds as those described above for the organic sulfur compound (1e) in the first rubber composition can be used for the organic sulfur compound (2e). Therefore, preferable organic sulfur compounds (2e) are thiophenols, diphenyl disulfides, thionaphthols, thiuram disulfides, and metal salts thereof. Preferable organic sulfur compounds (2e) are 2-thionaphthol, bis(pentabromophenyl)disulfide, and 2,6-dichlorothiophenol. Amorepreferable organic sulfur compound (2e) is2-thionaphthol.

From the standpoint that an outer-hard/inner-soft structure is easily obtained, the amount of the organic sulfur compound (2e) is preferably equal to or greater than 0.05 parts by weight, more preferably equal to or greater than 0.1 parts by weight, and particularly preferably equal to or greater than 0.2 parts by weight, per 100 parts by weight of the base rubber. In light of resilience performance, the amount is preferably equal to or less than 5.0 parts by weight, more preferably equal to or less than 3.0 parts by weight, and particularly preferably equal to or less than 1.0 parts by weight, per 100 parts by weight of the base rubber.

For the purpose of adjusting specific gravity and the like, a filler may be included in the second envelope layer 20. Examples of suitable fillers include zinc oxide, barium sulfate, calcium carbonate, and magnesium carbonate. The amount of the filler is determined as appropriate so that the intended specific gravity of the core 4 is accomplished. A particularly preferable filler is zinc oxide. Zinc oxide serves not only as a specific gravity adjuster but also as a crosslinking activator.

According to need, an anti-aging agent, a coloring agent, a plasticizer, a dispersant, sulfur, a vulcanization accelerator, and the like are added to the second rubber composition of the second envelope layer 20. Crosslinked rubber powder or synthetic resin powder may also be dispersed in the second rubber composition.

During heating and forming of the core 4, the base rubber (1a) is crosslinked by the co-crosslinking agent (1b). The base rubber (2a) is crosslinked by the co-crosslinking agent (2b). The heat of these crosslinking reactions remains near the central point of the core 4. Thus, during heating and forming of the core 4, the temperature at the central portion is high. The temperature gradually decreases from the central point toward the surface. In the first rubber composition which forms the first envelope layer 18 of the core 4, the acid reacts with the metal salt of the co-crosslinking agent (1b) to bond to cation. The salt reacts with the metal salt of the co-crosslinking agent (1b) to exchange cation. By the bonding

and the exchange, metal crosslinks are broken. In the second rubber composition which forms the second envelope layer 20 of the core 4, the acid reacts with the metal salt of the co-crosslinking agent (2b) to bond to cation. The salt reacts with the metal salt of the co-crosslinking agent (2b) to exchange cation. By the bonding and the exchange, metal crosslinks are broken. This breaking of the metal crosslinks in the core 4 is likely to occur near the innermost portion of the first envelope layer 18, and is unlikely to occur near the surface of the second envelope layer 20. As a result, the crosslinking density of the core 4 increases from its central point toward its surface. In the core 4, an outer-hard/inner-soft structure can be achieved. Further, since the first rubber composition includes the organic sulfur compound (1e) together with the acid and/or the salt (1d), and/or the second rubber composition includes the organic sulfur compound (2e) together with the acid and/or the salt (2d), the gradient of the hardness distribution can be controlled, and the degree of the outer-hard/inner-soft structure of the core 4 can be increased. In light of ease of controlling the gradient of the hardness distribution, the first rubber composition preferably includes the organic sulfur compound (1e) together with the acid and/or the salt (1d), and the second rubber compositionpreferably includes the organic sulfur compound (2e) together with the acid and/or the salt (2d). When the golf ball 2 that includes the core 4 is hit with a driver, the spin rate is low. In the golf ball 2, excellent flight performance is achieved upon a shot with a driver.

In the golf ball 2, when the first rubber composition of the first envelope layer 18 includes the acid and/or the salt (1d), the second rubber composition of the second envelope layer 20 may not include the acid and/or the salt (2d). When the second rubber composition of the second envelope layer 20 includes the acid and/or the salt (2d), the first rubber composition of the first envelope layer 18 may not include the acid and/or the salt (1d). From the standpoint that the gradient of the hardness distribution can be effectively controlled and the degree of the outer-hard/inner-soft structure of the core 4 can be further increased, the first rubber composition of the first envelope layer 18 preferably includes the acid and/or the salt (1d), and the second rubber composition of the second envelope layer 20 preferably includes the acid and/or the salt (2d).

For the mid layer 6, a resin composition is suitably used. Examples of the base polymer of the resin composition include ionomer resins, polystyrenes, polyesters, polyamides, and polyolefins.

Particularly preferable base polymers are ionomer resins. The golf ball 2 that includes the mid layer 6 including an ionomer resin has excellent resilience performance. An ionomer resin and another resin may be used in combination for the mid layer 6. In this case, the principal component of the base polymer is preferably the ionomer resin. Specifically, the proportion of the ionomer resin to the entire base polymer is preferably equal to or greater than 50% by weight, more preferably equal to or greater than 60% by weight, and particularly preferably equal to or greater than 70% by weight.

Examples of preferable ionomer resins include binary copolymers formed with an α-olefin and an α, β-unsaturated carboxylic acid having 3 to 8 carbon atoms. A preferable binary copolymer includes 80% by weight or greater but 90% by weight or less of an α-olefin, and 10% by weight or greater but 20% by weight or less of an α, β-unsaturated carboxylic acid. The binary copolymer has excellent resilience performance. Examples of other preferable ionomer resins include ternary copolymers formed with: an α-olefin; an α, β-unsaturated carboxylic acid having 3 to 8 carbon atoms; and an α, β-unsaturated carboxylate ester having 2 to 22 carbon atoms. A preferable ternary copolymer includes 70% by weight or greater but 85% by weight or less of an α-olefin, 5% by weight or greater but 30% by weight or less of an α, β-unsaturated carboxylic acid, and 1% by weight or greater but 25% by weight or less of an α, β-unsaturated carboxylate ester. The ternary copolymer has excellent resilience performance. For the binary copolymers and the ternary copolymers, preferable α-olefins are ethylene and propylene, while preferable α, β-unsaturated carboxylic acids are acrylic acid and methacrylic acid. A particularly preferable ionomer resin is a copolymer formed with ethylene and acrylic acid or methacrylic acid.

In the binary copolymers and the ternary copolymers, some of the carboxyl groups are neutralized with metal ions. Examples of metal ions for use in neutralization include sodium ion, potassium ion, lithium ion, zinc ion, calcium ion, magnesium ion, aluminum ion, and neodymium ion. The neutralization may be carried out with two or more types of metal ions. Particularly suitable metal ions in light of resilience performance and durability of the golf ball 2 are sodium ion, zinc ion, lithium ion, and magnesium ion.

Specific examples of ionomer resins include trade names "Himilan 1555", "Himilan 1557", "Himilan 1605", "Himilan 1706", "Himilan 1707", "Himilan 1856", "Himilan 1855", "Himilan AM7311", "Himilan AM7315", "Himilan AM7317", "Himilan AM7318", "Himilan AM7329", "Himilan MK7320", and "Himilan MK7329", manufactured by Du Pont-MITSUI POLYCHEMICALS Co., Ltd.; trade names "Surlyn 6120", "Surlyn 6910", "Surlyn 7930", "Surlyn 7940", "Surlyn 8140", "Surlyn 8150", "Surlyn 8940", "Surlyn 8945", "Surlyn 9120", "Surlyn 9150", "Surlyn 9910", "Surlyn 9945", "SurlynAD8546", "HPF1000", and"HPF2000", manufacturedbyE.I. du Pont de Nemours and Company; and trade names "IOTEK 7010", "IOTEK 7030", "IOTEK 7510", "IOTEK 7520", "IOTEK 8000", and "IOTEK 8030", manufactured by ExxonMobil Chemical Company.

Two or more ionomer resins may be used in combination for the mid layer 6. An ionomer resin neutralized with a monovalent metal ion, and an ionomer resin neutralized with a bivalent metal ion may be used in combination.

A preferable resin that can be used in combination with an ionomer resin is a styrene block-containing thermoplastic elastomer. The styrene block-containing thermoplastic elastomer has excellent compatibility with ionomer resins.

A resin composition including the styrene block-containing thermoplastic elastomer has excellent fluidity.

The styrene block-containing thermoplastic elastomer includes a polystyrene block as a hard segment, and a soft segment. A typical soft segment is a diene block. Examples of compounds for the diene block include butadiene, isoprene, 1, 3-pentadiene, and 2,3-dimethyl-1,3-butadiene. Butadiene and isoprene are preferred. Two or more compounds may be used in combination.

Examples of styrene block-containing thermoplastic elastomers include styrene-butadiene-styrene block copolymers (SBS), styrene-isoprene-styrene block copolymers (SIS), styrene-isoprene-butadiene-styrene block copolymers (SIBS), hydrogenated SBS, hydrogenated SIS, and hydrogenated SIBS. Examples of hydrogenated SBS include styrene-ethylene-butylene-styrene block copolymers (SEBS). Examples of hydrogenated SIS include styrene-ethylene-propylene-styrene block copolymers (SEPS). Examples of hydrogenated SIBS include styrene-ethylene-ethylene-propylene-styrene block copolymers (SEEPS).

In light of resilience performance of the golf ball 2, the content of the styrene component in the styrene block-containing thermoplastic elastomer is preferably equal to or greater than 10% by weight, more preferably equal to or greater than 12% by weight, and particularly preferably equal to or greater than 15% by weight. In light of feel at impact of the golf ball 2, the content is preferably equal to or less than 50% by weight, more preferably equal to or less than 47% by weight, and particularly preferably equal to or less than 45% by weight.

In the present invention, styrene block-containing thermoplastic elastomers include an alloy of an olefin and one or more members selected from the group consisting of SBS, SIS, SIBS, SEBS, SEPS, and SEEPS. The olefin component in the alloy is presumed to contribute to improvement of compatibility with ionomer resins. Use of this alloy improves the resilience performance of the golf ball 2. An olefin having 2 to 10 carbon atoms is preferably used. Examples of suitable olefins include ethylene, propylene, butene, and pentene. Ethylene and propylene are particularly preferred.

Specific examples of polymer alloys include trade names "Rabalon T3221C", "Rabalon T3339C", "Rabalon SJ4400N", "Rabalon SJ5400N", "Rabalon SJ6400N", "Rabalon SJ7400N", "Rabalon SJ8400N", "Rabalon SJ9400N", and "Rabalon SR04", manufactured by Mitsubishi Chemical Corporation. Other specific examples of styrene block-containing thermoplastic elastomers include trade name "Epofriend A1010" manufactured by Daicel Chemical Industries, Ltd., and trade name "Septon HG-252" manufactured by Kuraray Co., Ltd.

The mid layer 6 may include a highly elastic resin as the base polymer. The highly elastic resin contributes to high rigidity of the mid layer 6. Specific examples of the highly elastic resin include polyamides.

According to need, a coloring agent such as titanium dioxide, a filler such as barium sulfate, a dispersant, an antioxidant, an ultraviolet absorber, a light stabilizer, a fluorescent material, a fluorescent brightener, and the like are included in the resin composition of the mid layer 6 in an adequate amount.

From the standpoint that an outer-hard/inner-soft structure can be achieved in the sphere consisting of the core 4 and the mid layer 6, the mid layer 6 has a hardness Hm of preferably 30 or greater and more preferably 40 or greater. In light of controllability, the hardness Hm is preferably equal to or less than 75 and more preferably equal to or less than 73. The hardness Hm is measured according to the standards of "ASTM-D 2240-68" with a Shore D type hardness scale mounted to an automated rubber hardness measurement machine (trade name "P1", manufactured by Kobunshi Keiki Co., Ltd.). For the measurement, a slab that is formed by hot press and that has a thickness of about 2 mm is used. A slab kept at 23°C for two weeks is used for the measurement. At the measurement, three slabs are stacked. A slab formed from the same resin composition as the resin composition of the mid layer 6 is used.

The mid layer 6 preferably has a thickness Tm of 0.5 mm or greater but 1.6 mm or less. The mid layer 6 having a thickness Tm of 0.5 mm or greater can contribute to the durability of the golf ball 2. In this respect, the thickness Tm is particularly preferably equal to or greater than 0.7 mm. The golf ball 2 that includes the mid layer 6 having a thickness Tm of 1.6 mm or less can include a large core 4. The large core 4 can contribute to the resilience performance of the golf ball 2. In this respect, the thickness Tm is particularly preferably equal to or less than 1.4 mm.

For forming the mid layer 6, known methods such as injection molding, compression molding, and the like can be used. The golf ball 2 may have two or more layers as the mid layer 6.

For the cover 10, a resin composition is suitably used. A preferable base polymer of the resin composition is a polyurethane. The polyurethane is flexible. When the golf ball 2 that includes the cover 10 formed from the resin composition that includes the polyurethane is hit with a short iron, the spin rate is high. The cover 10 formed from this resin composition contributes to controllability upon a shot with a short iron. Furthermore, the polyurethane can also contribute to excellent feel at impact when the golf ball 2 is hit with a putter or a short iron.

In light of ease of forming the cover 10, a preferable base polymer is a thermoplastic polyurethane elastomer. The thermoplastic polyurethane elastomer includes a polyurethane component as a hard segment, and a polyester component or a polyether component as a soft segment. Examples of isocyanates for the polyurethane component include alicyclic diisocyanates, aromatic diisocyanates, and aliphatic diisocyanates. Two or more diisocyanates may be used in combination.

Examples of alicyclic diisocyanates include 4,4'-dicyclohexylmethane diisocyanate ($H_{12}MDI$), 1,3-bis(isocyanatomethyl)cyclohexane ($H_6XDI$), isophorone diisocyanate (IPDI), and trans-1,4-cyclohexane diisocyanate (CHDI). In

light of versatility and processability, $H_{12}MDI$ is preferred.

Examples of aromatic diisocyanates include 4,4'-diphenylmethane diisocyanate (MDI) and toluene diisocyanate (TDI). Examples of aliphatic diisocyanates include hexamethylene diisocyanate (HDI).

Specific examples of thermoplastic polyurethane elastomers include trade names "Elastollan NY80A", "Elastollan NY82A", "Elastollan NY84A", "Elastollan NY85A", "Elastollan NY88A", "Elastollan NY90A", "Elastollan NY97A", "Elastollan NY585", and "Elastollan XKP016N", manufactured by BASF Japan Ltd. ; and trade names "RESAMINE P4585LS" and "RESAMINE PS62490", manufactured by Dainichiseika Color & Chemicals Mfg. Co., Ltd.

From the standpoint that a low hardness of the cover 10 can be achieved, particularly preferable thermoplastic polyurethane elastomers are "Elastollan NY80A", "Elastollan NY82A","Elastollan NY84A","Elastollan NY85A",and"Elastollan NY90A".

A thermoplastic polyurethane elastomer and another resin may be used in combination. Examples of the resin that can be used in combination include thermoplastic polyester elastomers, thermoplastic polyamide elastomers, thermoplastic polyolefin elastomers, styrene block-containing thermoplastic elastomers, and ionomer resins. When a thermoplastic polyurethane elastomer and another resin are used in combination, the thermoplastic polyurethane elastomer is included as the principal component of the base polymer, in light of spin performance. The proportion of the thermoplastic polyurethane elastomer to the entire base polymer is preferably equal to or greater than 50% by weight, more preferably equal to or greater than 70% by weight, and particularly preferably equal to or greater than 85% by weight.

According to need, a coloring agent such as titanium dioxide and a fluorescent pigment, a filler such as barium sulfate, a dispersant, an antioxidant, an ultraviolet absorber, a light stabilizer, a fluorescent material, a fluorescent brightener, and the like are included in the cover 10 in an adequate amount.

The cover 10 preferably has a Shore D hardness Hc of 55 or less. The golf ball 2 that includes the cover 10 having a hardness Hc of 55 or less has excellent controllability. In this respect, the hardness Hc is more preferably equal to or less than 50 and particularly preferably equal to or less than 48. In light of flight distance upon a shot with a driver, the hardness Hc is preferably equal to or greater than 10. The hardness Hc is measured by the same measurement method as that for the hardness Hm.

The cover 10 preferably has a thickness Tc of 1.1 mm or less. The golf ball 2 having a thickness Tc of 1.1 mm or less has excellent resilience performance. In this respect, the thickness Tc is more preferably equal to or less than 1.0 mm and particularly preferably equal to or less than 0.8 mm. In light of controllability, the thickness Tc is preferably equal to or greater than 0.1 mm.

For forming the cover 10, known methods such as injection molding, compression molding, and the like can be used. When forming the cover 10, the dimples 12 are formed by pimples formed on the cavity face of a mold.

In the present invention, a JIS-C hardness at a measuring point whose ratio of the distance from the central point of the core 4 to the radius of the core 4 is x% is represented by H (x) . For example, the hardness at the first point described above, i.e., the hardness at the central point of the core 4 is represented by H (0), and the hardness at the eleventh point described above, i.e., the surface hardness of the core 4 is represented by H (100).

In the golf ball 2, the difference (H(100)-H(0)) between the surface hardness H(100) and the central hardness H(0) is preferably equal to or greater than 15. The core 4 in which the difference (H(100)-H(0)) is equal to or greater than 15 has an outer-hard/inner-soft structure. When the golf ball 2 is hit with a driver, the recoil (torsional return) in the core 4 is great, and thus spin is suppressed. The core 4 contributes to the flight performance of the golf ball 2. In light of flight performance, the difference (H(100)-H(0)) is more preferably equal to or greater than 23 and particularly preferably equal to or greater than 24. From the standpoint that the core 4 can easily be formed, the difference (H(100)-H(0)) is preferably equal to or less than 50. In the core 4, the hardness gradually increases from its central point toward its surface.

The central hardness H (0) is preferably equal to or greater than 40 but equal to or less than 70. The golf ball 2 having a hardness H(0) of 40 or greater has excellent resilience performance. In this respect, the hardness H(0) is more preferably equal to or greater than 45 and particularly preferably equal to or greater than 50. In the core 4 having a hardness H (0) of 70 or less, an outer-hard/inner-soft structure can be achieved. In the golf ball 2 that includes the core 4, spin can be suppressed. In this respect, the hardness H(0) is more preferably equal to or less than 65 and particularly preferably equal to or less than 60.

The surface hardness H(100) is preferably equal to or greater than 78 but equal to or less than 96. In the core 4 having a hardness H(100) of 78 or greater, an outer-hard/inner-soft structure can be achieved. In the golf ball 2 that includes the core 4, spin can be suppressed. In this respect, the hardness H(100) is more preferably equal to or greater than 82 and particularly preferably equal to or greater than 84. The golf ball 2 having a hardness H(100) of 96 or less has excellent durability. In this respect, the hardness H (100) is more preferably equal to or less than 94 and particularly preferably equal to or less than 92.

Preferably, in the golf ball 2, a JIS-C hardness H (36) at the third point whose ratio of the distance from the central point of the core 4 to the radius of the core 4 is 36% and a JIS-C hardness H(39) at the fourth point whose ratio of the distance from the central point of the core 4 to the radius of the core 4 is 39% meet the relationship of the following mathematical formula.

$$H(39) > H(36)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(39)-H(36)) between the hardness H (39) and the hardness H (36) is preferably equal to or greater than 0.5 and more preferably equal to or greater than 2. In light of durability, the difference (H(39)-H(36)) is preferably equal to or less than 10 and more preferably equal to or less than 8.

Preferably, in the golf ball 2, a JIS-C hardness H (75) at the seventh point whose ratio of the distance from the central point of the core 4 to the radius of the core 4 is 75% and a JIS-C hardness H(76) at the eighth point whose ratio of the distance from the central point of the core 4 to the radius of the core 4 is 76% meet the relationship of the following mathematical formula.

$$H(76) > H(75)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H (76)-H(75)) between the hardness H (76) and the hardness H (75) is preferably equal to or greater than 1 and more preferably equal to or greater than 2. In light of durability, the difference (H(76)-H(75)) is preferably equal to or less than 10 and more preferably equal to or less than 8.

In the golf ball 2, the hardness H(75) and the surface hardness H(100) meet the relationship of the following mathematical formula.

$$H(100) > H(75)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(100)-H(75)) between the hardness H (100) and the hardness H (75) is preferably equal to or greater than 4 and more preferably equal to or greater than 10. In light of durability, the difference (H(100)-H(75)) is preferably equal to or less than 25 and more preferably equal to or less than 20.

In the golf ball 2, the hardness H(36) and the surface hardness H(100) meet the relationship of the following mathematical formula.

$$H(100) > H(36)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(100)-H(36)) between the hardness H (100) and the hardness H (36) is preferably equal to or greater than 15 and more preferably equal to or greater than 20. In light of durability, the difference (H(100)-H(36)) is preferably equal to or less than 30 and more preferably equal to or less than 28.

In the golf ball 2, the hardness H(39) and the surface hardness H(100) meet the relationship of the following mathematical formula.

$$H(100) > H(39)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(100)-H(39)) between the hardness H (100) and the hardness H (39) is preferably equal to or greater than 12 and more preferably equal to or greater than 15. In light of durability, the difference (H(100)-H(39)) is preferably equal to or less than 30 and more preferably equal to or less than 28.

In the golf ball 2, the hardness H(76) and the surface hardness H(100) meet the relationship of the following mathematical formula.

$$H(100) > H(76)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(100)-H(76)) between the hardness H (100) and the hardness H (76) is preferably equal to or greater than 1 and more preferably equal to or greater than 5. In light of durability, the difference (H(100)-H(76)) is preferably equal to or less than 8 and more preferably equal to or less than 7.

In the golf ball 2, the hardness H(39) and the hardness H(75) meet the relationship of the following mathematical formula.

$$H(75) > H(39)$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H(75)-H(39)) between the hardness H (75) and the hardness H (39) is preferably equal to or greater than 5 and more preferably equal to or greater than 6. In light of durability, the difference (H(75)-H(39)) is preferably equal to or less than 10 and more preferably equal to or less than 9.

In the golf ball 2, an average hardness H1 of the hardness H(39), the hardness H(51), the hardness H(63), and the hardness H(75), and an average hardness H2 of the hardness H(76), the hardness H (84), the hardness H (92), and the hardness H (100) meet the relationship of the following mathematical formula.

$$H2 > H1$$

When the golf ball 2 is hit with a driver, the core 4 becomes significantly distorted since the head speed is high. Since the core 4 has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of the core 4. The suppression of the spin rate and the high launch speed achieve a large flight distance.

In light of flight performance, the difference (H2-H1) between the average hardness H2 and the average hardness H1 is preferably equal to or greater than 6 and more preferably equal to or greater than 8. In light of durability, the difference (H2-H1) is preferably equal to or less than 25 and more preferably equal to or less than 20.

Preferably, in the golf ball 2, the hardness Hm of the mid layer 6 and the hardness Hc of the cover 10 meet the relationship of the following mathematical formula.

$$Hm > Hc$$

When the golf ball 2 is hit with a driver, the sphere consisting of the core 4 and the mid layer 6 becomes significantly distorted since the head speed is high. Since the sphere has an outer-hard/inner-soft structure, the spin rate is suppressed. The hardnesses of the first envelope layer 18 and/or the second envelope layer 20 linearly change. Thus, the golf ball 2 is launched at a high speed due to deformation and restoration of this sphere. The suppression of the spin rate and the high launch speed achieve a large flight distance. When the golf ball 2 is hit with a short iron, this sphere becomes less distorted since the head speed is low. When the golf ball 2 is hit with a short iron, the behavior of the golf ball 2 depends on the cover 10. Since the cover 10 is flexible, a slip between the golf ball 2 and a clubface is suppressed. Due to the suppression of the slip, a high spin rate is obtained. The high spin rate achieves excellent controllability. In the golf ball 2, both desired flight performance upon a shot with a driver and desired controllability upon a shot with a short iron can be achieved.

When the golf ball 2 is hit, the cover 10 absorbs the shock. This absorption achieves soft feel at impact. Particularly, when the golf ball 2 is hit with a short iron or a putter, the cover 10 achieves excellent feel at impact.

In light of achievement of both desired flight performance and desired controllability, the difference (Hm-Hc) between the hardness Hm and the hardness Hc is preferably equal to or greater than 18 and more preferably equal to or greater than 20. The difference (Hm-Hc) is preferably equal to or less than 60.

The reinforcing layer 8 is positioned between the mid layer 6 and the cover 10. The reinforcing layer 8 firmly adheres to the mid layer 6 and also to the cover 10. The reinforcing layer 8 suppresses separation of the cover 10 from the mid layer 6. In the golf ball 2, when the mid layer 6 is formed from a resin composition and the cover 10 is formed from a resin composition whose base resin is different from the base resin of the mid layer 6, the reinforcing layer 8 effectively suppresses separation of the cover 10 from the mid layer 6.

As the base polymer of the reinforcing layer 8, a two-component curing type thermosetting resin is suitably used. Specific examples of two-component curing type thermosetting resins include epoxy resins, urethane resins, acrylic resins, polyester resins, and cellulose resins. In light of strength and durability of the reinforcing layer 8, two-component curing type epoxy resins and two-component curing type urethane resins are preferred.

A two-component curing type epoxy resin is obtained by curing an epoxy resin with a polyamide type curing agent. Examples of epoxy resins used in two-component curing type epoxy resins include bisphenol A type epoxy resins, bisphenol F type epoxy resins, and bisphenol AD type epoxy resins. A bisphenol A type epoxy resin is obtained by a reaction of bisphenol A and an epoxy group-containing compound such as epichlorohydrin or the like. A bisphenol F type epoxy resin is obtained by a reaction of bisphenol F and an epoxy group-containing compound. A bisphenol AD type epoxy resin is obtained by a reaction of bisphenol AD and an epoxy group-containing compound. In light of balance among flexibility, chemical resistance, heat resistance, and toughness, bisphenol A type epoxy resins are preferred.

The polyamide type curing agent has a plurality of amino groups and one or more amide groups. The amino groups can react with epoxy groups. Specific examples of the polyamide type curing agent include polyamide amine curing agents and modified products thereof. A polyamide amine curing agent is obtained by a condensation reaction of a polymerized fatty acid and a polyamine. A typical polymerized fatty acid is obtained by heating and combining natural fatty acids including a large amount of unsaturated fatty acids, such as linoleic acid, linolenic acid, and the like, in the presence of a catalyst. Specific examples of unsaturated fatty acids include tall oil, soybean oil, linseed oil, and fish oil. A hydrogenated polymerized fatty acid having a dimer content of 90% by weight or greater and a trimer content of 10% by weight or less is preferred. Examples of preferable polyamines include polyethylene diamines, polyoxyalkylene diamines, and derivatives thereof.

In a mixture of an epoxy resin and a polyamide type curing agent, the ratio of the epoxy equivalent of the epoxy resin to the amine active hydrogen equivalent of the polyamide type curing agent is preferably equal to or greater than 1.0/1.4 but equal to or less than 1.0/1.0.

A two-component curing type urethane resin is obtained by a reaction of a base material and a curing agent. A two-component curing type urethane resin obtained by a reaction of a base material containing a polyol component and a curing agent containing a polyisocyanate or a derivative thereof, and a two-component curing type urethane resin obtained by a reaction of a base material containing an isocyanate group-terminated urethane prepolymer and a curing agent having active hydrogen, can be used. Particularly, a two-component curing type urethane resin obtained by a reaction of a base material containing a polyol component and a curing agent containing a polyisocyanate or a derivative thereof, is preferred.

As the polyol component of the base material, a urethane polyol is preferably used. The urethane polyol has urethane bonds and at least two or more hydroxyl groups. Preferably, the urethane polyol has hydroxyl groups at its ends. The urethane polyol can be obtained by causing a reaction of a polyol and a polyisocyanate at such a ratio that the hydroxyl groups of the polyol component are excessive in mole ratio with respect to the isocyanate groups of the

polyisocyanate.

The polyol used for producing the urethane polyol has a plurality of hydroxyl groups. Polyols having a weight average molecular weight of 50 or greater but 2000 or less are preferred, and polyols having a weight average molecular weight of 100 or greater but 1000 or less are particularly preferred. Examples of low-molecular-weight polyols include diols and triols. Specific examples of diols include ethylene glycol, diethylene glycol, triethylene glycol, 1,3-butanediol, 1,4-butanediol, neopentyl glycol, and 1,6-hexanediol. Specific examples of triols include trimethylol propane and hexanetriol. Examples of high-molecular-weight polyols include polyether polyols such as polyoxyethylene glycol (PEG), polyoxypropylene glycol (PPG), and polyoxytetramethylene glycol (PTMG); condensed polyester polyols such as polyethylene adipate (PEA), polybutylene adipate (PBA), and polyhexamethylene adipate (PHMA) ; lactone polyester polyols such as poly-ε-caprolactone (PCL); polycarbonate polyols such as polyhexamethylene carbonate; and acrylic polyols. Two or more polyols may be used in combination.

The polyisocyanate used for producing the urethane polyol has a plurality of isocyanate groups. Specific examples of the polyisocyanate include aromatic polyisocyanates such as 2,4-toluene diisocyanate, 2,6-toluene diisocyanate, a mixture (TDI) of 2,4-toluene diisocyanate and 2,6-toluene diisocyanate, 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), and paraphenylene diisocyanate (PPDI); alicyclic polyisocyanates such as 4,4'-dicyclohexylmethane diisocyanate ($H_{12}$MDI), hydrogenated xylylene diisocyanate ($H_6$XDI), and isophorone diisocyanate (IPDI); and aliphatic polyisocyanates such as hexamethylene diisocyanate (HDI). Two or more of these polyisocyanates may be used in combination. In light of weather resistance, TMXDI, XDI, HDI, $H_6$XDI, IPDI, and $H_{12}$MDI are preferred.

In the reaction of the polyol and the polyisocyanate for producing the urethane polyol, a known catalyst can be used. A typical catalyst is dibutyl tin dilaurate.

In light of strength of the reinforcing layer 8, the proportion of the urethane bonds included in the urethane polyol is preferably equal to or greater than 0.1 mmol/g. In light of followability of the reinforcing layer 8 to the cover 10, the proportion of the urethane bonds included in the urethane polyol is preferably equal to or less than 5 mmol/g. The proportion of the urethane bonds can be adjusted by adjusting the molecular weight of the polyol, which is the material for the urethane polyol, and adjusting the blending ratio of the polyol and the polyisocyanate.

From the standpoint that the time taken for the reaction of the base material and the curing agent is short, the weight average molecular weight of the urethane polyol is preferably equal to or greater than 4000 and particularly preferably equal to or greater than 4500. In light of adhesion of the reinforcing layer 8, the weight average molecular weight of the urethane polyol is preferably equal to or less than 10000 and particularly preferably equal to or less than 9000.

In light of adhesion of the reinforcing layer 8, the hydroxyl value (mg KOH/g) of the urethane polyol is preferably equal to or greater than 15 and particularly preferably equal to or greater than 73. From the standpoint that the time taken for the reaction of the base material and the curing agent is short, the hydroxyl value of the urethane polyol is preferably equal to or less than 130 and particularly preferably equal to or less than 120.

The base material may contain, together with a urethane polyol, a polyol that does not have any urethane bond. The aforementioned polyol that is the material for the urethane polyol can be used in the base material. Polyols compatible with the urethane polyol are preferred. From the standpoint that the time taken for the reaction of the base material and the curing agent is short, the proportion of the urethane polyol in the base material on the solid content basis is preferably equal to or greater than 50% by weight and particularly preferably equal to or greater than 80% by weight. Ideally, the proportion is 100% by weight.

The curing agent contains a polyisocyanate or a derivative thereof. The aforementioned polyisocyanate that is the material for the urethane polyol can be used in the curing agent.

The reinforcing layer 8 may include additives such as a coloring agent (typically,titanium dioxide), a phosphate-based stabilizer, an antioxidant, a light stabilizer, a fluorescent brightener, an ultraviolet absorber, an anti-blocking agent, and the like. The additives may be added to the base material of the two-component curing type thermosetting resin, or may be added to the curing agent of the two-component curing type thermosetting resin.

The reinforcing layer 8 is obtained by applying, to the surface of the mid layer 6, a liquidthat is prepared by dissolving or dispersing the base material and the curing agent in a solvent. In light of workability, application with a spray gun is preferred. After the application, the solvent is volatilized to permit a reaction of the base material with the curing agent, thereby forming the reinforcing layer 8. Examples of preferable solvents include toluene, isopropyl alcohol, xylene, methyl ethylketone, methyl isobutylketone, ethylene glycol monomethyl ether, ethylbenzene, propylene glycol monomethyl ether, isobutyl alcohol, and ethyl acetate.

In light of feel at impact, the golf ball 2 has an amount of compressive deformation (comp'n) of preferably 2.3 mm or greater, more preferably 2.5 mm or greater, and particularly preferably 2.7 mm or greater. In light of resilience performance, the amount of compressive deformation is preferably equal to or less than 3.5 mm, more preferably equal to or less than 3.3 mm, and particularly preferably equal to or less than 3.1 mm.

For measurement of the amount of compressive deformation, a YAMADA type compression tester is used. In the tester, the golf ball 2 is placed on a hard plate made of metal. Next, a cylinder made of metal gradually descends

toward the golf ball 2. The golf ball 2, squeezed between the bottom face of the cylinder and the hard plate, becomes deformed. A migration distance of the cylinder, starting from the state in which an initial load of 98 N is applied to the golf ball 2 up to the state in which a final load of 1274 N is applied thereto, is measured.

EXAMPLES

[Example 1]

A rubber composition was obtained by kneading 100 parts by weight of a high-cis polybutadiene (trade name "BR-730", manufactured by JSR Corporation), 23 parts by weight of zinc diacrylate (trade name "Sanceler SR", manufactured by SANSHIN CHEMICAL INDUSTRY CO., LTD.), 5 parts by weight of zinc oxide, an appropriate amount of barium sulfate, 0.3 parts by weight of bis(pentabromophenyl)disulfide, and 0.8 parts by weight of dicumyl peroxide. This rubber composition was placed into a mold including upper and lower mold halves each having a hemispherical cavity, and heated at 170°C for 25 minutes to obtain a center with a diameter of 15.0 mm.

A first rubber composition was obtained by kneading 100 parts by weight of a high-cis polybutadiene (the aforementioned "BR-730"), 25 parts by weight of zinc diacrylate (the aforementioned "Sanceler SR"), 5 parts by weight of zinc oxide, an appropriate amount of barium sulfate, 0.2 parts by weight of 2-thionaphthol, 0.8 parts by weight of dicumyl peroxide, and 5.0 parts by weight of zinc octoate. Half shells were formed from this first rubber composition. The center was covered with two of these half shells. The center and the half shells were placed into a mold including upper and lower mold halves each having a hemispherical cavity, and heated at 170°C for 25 minutes to obtain a sphere with a diameter of 30.0 mm. A first envelope layer was formed from the first rubber composition.

A second rubber composition was obtained by kneading 100 parts by weight of a high-cis polybutadiene (the aforementioned "BR-730"), 35 parts by weight of zinc diacrylate (the aforementioned "Sanceler SR"), 5 parts by weight of zinc oxide, an appropriate amount of barium sulfate, 0.2 parts by weight of 2-thionaphthol, 0.8 parts by weight of dicumyl peroxide, and 5.0 parts by weight of zinc octoate. Half shells were formed from this second rubber composition. The sphere was covered with two of these half shells. The sphere and the half shells were placed into a mold including upper and lower mold halves each having a hemispherical cavity, and heated at 170°C for 25 minutes to obtain a core with a diameter of 39.7 mm. A second envelope layer was formed from the second rubber composition. The amount of barium sulfate was adjusted such that the specific gravity of each of the first envelope layer and the second envelope layer is equal to the specific gravity of the center, and the weight of a golf ball is 45.4 g.

A resin composition was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder. The core was placed into a mold. The resin composition was injected around the core by injection molding to form a mid layer with a thickness Tm of 1.0 mm.

Apaint composition (trade name "POLIN 750LE", manufactured by SHINTO PAINT CO., LTD.) including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the mid layer with a spray gun, and kept at 23°C for 12 hours to obtain a reinforcing layer with a thickness of 10 $\mu$m.

A resin composition was obtained by kneading 100 parts by weight of a thermoplastic polyurethane elastomer (the aforementioned "Elastollan NY82A"), 0.2 parts by weight of a hindered amine light stabilizer (trade name "TINUVIN 770", manufactured by Ciba Japan K.K.), 4 parts by weight of titanium dioxide, and 0.04 parts by weight of ultramarine blue with a twin-screw kneading extruder. Half shells were formed from this resin composition by compression molding. The sphere consisting of the core, the mid layer, and the reinforcing layer was covered with two of these half shells. The sphere and the half shells were placed into a mold including upper and lower mold halves each having a hemispherical cavity. A cover was obtained from the half shells by compression molding. The thickness Tc of the cover was 0.5 mm. Dimples having a shape that is the inverted shape of pimples were formed on the cover. A clear paint including a two-component curing type polyurethane as a base material was applied to this cover to obtain a golf ball of Example 1 with a diameter of 42.7 mm.

[Examples 2 to 17 and Comparative Example 2]

Golf balls of Examples 2 to 17 and Comparative Example 2 were obtained in the same manner as Example 1, except the specifications of the center, the first envelope layer, the second envelope layer, the mid layer, and the cover were as shown in Tables 12 to 15 below. The compositions of the center and the second envelope layer are shown in detail in Tables 1 and 2 below. The composition of the first envelope layer is shown in detail in Tables 3 to 6 below. A

hardness distribution of the core is shown in Tables 8 to 11 below. The compositions of the mid layer and the cover are shown in detail in Table 7 below.

[Comparative Example 1]

A rubber composition (corresponding to composition F1 in Table 1) was obtained by kneading 100 parts by weight of a high-cis polybutadiene (the aforementioned "BR-730"), 23 parts by weight of zinc diacrylate (the aforementioned "Sanceler SR"), 5 parts by weight of zinc oxide, an appropriate amount of barium sulfate, 0.3 parts by weight of bis (pentabromophenyl) disulfide, and 0.8 parts by weight of dicumyl peroxide. This rubber composition was placed into a mold including upper and lower mold halves each having a hemispherical cavity, and heated at 170°C for 25 minutes to obtain a center with a diameter of 15.0 mm.

A rubber composition (corresponding to composition F2 in Table 1) was obtained by kneading 100 parts by weight of a high-cis polybutadiene (the aforementioned "BR-730"), 35 parts by weight of zinc diacrylate (the aforementioned "Sanceler SR"), 5 parts by weight of zinc oxide, an appropriate amount of barium sulfate, 0.2 parts by weight of 2-thionaphthol, 0.8 parts by weight of dicumyl peroxide, and 5.0 parts by weight of zinc octoate. Half shells were formed from this rubber composition. The center was covered with two of these half shells. The center and the half shells were placed into a mold including upper and lower mold halves each having a hemispherical cavity, and heated at 170°C for 25 minutes to obtain a core with a diameter of 39.7 mm. An envelope layer was formed from the rubber composition. The amount of barium sulfate was adjusted such that the specific gravity of the envelope layer is equal to the specific gravity of the center, and the weight of a golf ball is 45.4 g.

A resin composition (corresponding to composition Min Table 7) was obtained by kneading 55 parts by weight of an ionomer resin (the aforementioned "Surlyn 8945"), 45 parts by weight of another ionomer resin (the aforementioned "Himilan AM7329"), and 3 parts by weight of titanium dioxide with a twin-screw kneading extruder. The core was placed into a mold. The resin composition was injected around the core by injection molding to form a mid layer with a thickness Tm of 1.0 mm.

A paint composition (the aforementioned "POLIN 750LE") including a two-component curing type epoxy resin as a base polymer was prepared. The base material liquid of this paint composition includes 30 parts by weight of a bisphenol A type solid epoxy resin and 70 parts by weight of a solvent. The curing agent liquid of this paint composition includes 40 parts by weight of a modified polyamide amine, 55 parts by weight of a solvent, and 5 parts by weight of titanium dioxide. The weight ratio of the base material liquid to the curing agent liquid is 1/1. This paint composition was applied to the surface of the mid layer with a spray gun, and kept at 23°C for 12 hours to obtain a reinforcing layer with a thickness of 10 μm.

A resin composition (corresponding to composition C in Table 7) was obtained by kneading 100 parts by weight of a thermoplastic polyurethane elastomer (the aforementioned "Elastollan NY82A"), 0 .2 parts by weight of a hindered amine light stabilizer (the aforementioned "TINUVIN 770"), 4 parts by weight of titanium dioxide, and 0.04 parts by weight of ultramarine blue with a twin-screw kneading extruder. Half shells were formed from this resin composition by compression molding. The sphere consisting of the core, the mid layer, and the reinforcing layer was covered with two of these half shells. The sphere and the half shells were placed into a mold including upper and lower mold halves each having a hemispherical cavity. A cover was obtained from the half shells by compression molding. The thickness Tc of the cover was 0.5 mm. Dimples having a shape that is the inverted shape of pimples were formed on the cover. A clear paint including a two-component curing type polyurethane as a base material was applied to this cover to obtain a golf ball of Comparative Example 1 with a diameter of 42.7 mm. A hardness distribution of the core of Comparative Example 1 is shown in Table 9 below.

[Hit with Driver (W#1)]

A driver with a titanium head (trade name "XXIO", manufactured by DUNLOP SPORTS CO. LTD., shaft hardness: S, loft angle: 10.0°) was attached to a swing machine manufactured by True Temper Co. A golf ball was hit under the condition of a head speed of 45 m/sec. The spin rate was measured immediately after the hit. Furthermore, the distance from the launch point to the stop point was measured. The average value of data obtained by 10 measurements is shown in Tables 12 to 15 below.

Table 1 Compositions of Center and Second Envelop Layer

| (parts by weight) | | | |
|---|---|---|---|
| | F1 | F2 | F3 |
| BR-730 | 100 | 100 | 100 |

(continued)

| (parts by weight) | | | |
|---|---|---|---|
| Sanceler SR | 23 | 35 | 32 |
| ZN-DA90S | | | |
| Zinc oxide | 5 | 5 | 5 |
| Barium sulfate | * | * | * |
| 2-thionaphthol | | 0.2 | 0.2 |
| Bis(pentabromophenyl)disulfide | 0.3 | | |
| 2,6-dichlorothiophenol | | | |
| Dicumyl peroxide | 0.8 | 0.8 | 0.8 |
| Zinc octoate | | 5 | |
| Zinc stearate | | | |
| Total amount of acid and/or salt | 0.0 | 5.0 | 0.0 |
| *Appropriate amount | | | |

Table 2 Compositions of Center and Second Envelop Layer

| | (parts by weight) | |
|---|---|---|
| | F4 | F5 |
| BR-730 | 100 | 100 |
| Sanceler SR | 33 | 40 |
| ZN-DA90S | | |
| Zinc oxide | 5 | 5 |
| Barium sulfate | * | * |
| 2-thionaphthol | 0.2 | 0.2 |
| Bis(pentabromophenyl)disulfide | | |
| 2,6-dichlorothiophenol | | |
| Dicumyl peroxide | 0.8 | 0.8 |
| Zinc octoate | 0.5 | 45 |
| Zinc stearate | | |
| Total amount of acid and/or salt | 0.5 | 45.0 |
| *Appropriate amount | | |

Table 3 Composition of First Envelop Layer

| | (parts by weight) | | | |
|---|---|---|---|---|
| | S1 | S2 | S3 | S4 |
| BR-730 | 100 | 100 | 100 | 100 |
| Sanceler SR | 25 | 24 | 27 | 24 |
| ZN-DA90S | | | | |
| Zinc oxide | 5 | 5 | 5 | 5 |

(continued)

| (parts by weight) | | | | |
|---|---|---|---|---|
| | S1 | S2 | S3 | S4 |
| Barium sulfate | * | * | * | * |
| 2-thionaphthol | 0.2 | 0.2 | 0.2 | 0.2 |
| Bis(pentabromophenyl)disulfide | | | | |
| 2,6-dichlorothiophenol | | | | |
| Dicumyl peroxide | 0.8 | 0.8 | 0.8 | 0.8 |
| Zinc octoate | 5 | 2 | 12 | |
| Zinc stearate | | | | 5 |
| Total amount of acid and/or salt | 5.0 | 2.0 | 12.0 | 5.0 |
| *Appropriate amount | | | | |

Table 4 Composition of First Envelop Layer

| (parts by weight) | | | | |
|---|---|---|---|---|
| | S5 | S6 | S7 | S8 |
| BR-730 | 100 | 100 | 100 | 100 |
| Sanceler SR | 28 | 26 | | 26 |
| ZN-DA90S | | | 25 | |
| Zinc oxide | 5 | 5 | 5 | 5 |
| Barium sulfate | * | * | * | * |
| 2-thionaphthol | | | 0.2 | 0.2 |
| Bis(pentabromophenyl)disulfide | 0.3 | | | |
| 2,6-dichlorothiophenol | | 0.1 | | |
| Dicumyl peroxide | 0.8 | 0.8 | 0.8 | 0.8 |
| Zinc octoate | 5 | 5 | 5 | 5 |
| Zinc stearate | | | | |
| Total amount of acid and/or salt | 5.0 | 5.0 | 5.0 | 5.0 |
| *Appropriate amount | | | | |

Table 5 Composition of First Envelop Layer

| (parts by weight) | | | | |
|---|---|---|---|---|
| | S9 | S10 | S11 | S12 |
| BR-730 | 100 | 100 | 100 | 100 |
| Sanceler SR | 22 | 23 | 30 | 15 |
| ZN-DA90S | | | | |
| Zinc oxide | 5 | 5 | 5 | 5 |
| Barium sulfate | * | * | * | * |
| 2-thionaphthol | 0.2 | 0.2 | 0.2 | 0.2 |

(continued)

| (parts by weight) | | | | |
|---|---|---|---|---|
| | S9 | S10 | S11 | S12 |
| Bis(pentabromophenyl)disulfide | | | | |
| 2,6-dichlorothiophenol | | | | |
| Dicumyl peroxide | 0.8 | 0.8 | 0.8 | 0.8 |
| Zinc octoate | | 0.5 | 45 | 5 |
| Zinc stearate | | | | |
| Total amount of acid and/or salt | 0.0 | 0.5 | 45.0 | 5.0 |
| *Appropriate amount | | | | |

Table 6 Composition of First Envelop Layer

| (parts by weight) | | | |
|---|---|---|---|
| | S13 | S14 | S15 |
| BR-730 | 100 | 100 | 100 |
| Sanceler SR | 35 | 20 | 32 |
| ZN-DA90S | | | |
| Zinc oxide | 5 | 5 | 5 |
| Barium sulfate | * | * | * |
| 2-thionaphthol | 0.2 | 0.2 | 0.2 |
| Bis(pentabromophenyl)disulfide | | | |
| 2,6-dichlorothiophenol | | | |
| Dicumyl peroxide | 0.8 | 0.8 | 0.8 |
| Zinc octoate | 5 | 5 | 5 |
| Zinc stearate | | | |
| Total amount of acid and/or salt | 5.0 | 5.0 | 5.0 |
| *Appropriate amount | | | |

The details of the compounds listed in Tables 1 to 6 are as follows.

BR-730: a high-cis polybutadiene manufactured by JSR Corporation (cis-1,4-bond content: 96% by weight, 1,2-vinyl bond content: 1.3% by weight, Mooney viscosity ($ML_{1+4}$(100°C)): 55, molecular weight distribution (Mw/Mn): 3)

Sanceler SR: zinc diacrylate manufactured by SANSHIN CHEMICAL INDUSTRY CO., LTD. (a product coated with 10% by weight of stearic acid)

ZN-DA90S: zinc diacrylate manufactured by Nihon Jyoryu Kogyo Co., Ltd. (a product coated with 10% by weight of zinc stearate)

Zinc oxide: trade name "Ginrei R" manufactured by Toho Zinc Co., Ltd.

Barium sulfate : trade name "Barium Sulfate BD" manufactured by Sakai Chemical Industry Co., Ltd.

2-thionaphthol: a product of Tokyo Chemical Industry Co. , Ltd.

Bis(pentabromophenyl)disulfide: a product of Kawaguchi Chemical Industry Co., LTD.

2,6-dichlorothiophenol: a product of Tokyo Chemical Industry Co., Ltd.

Dicumyl peroxide: trade name "Percumyl D" manufactured by NOF Corporation

Zinc octoate: a product of Mitsuwa Chemicals Co., Ltd.

Zinc stearate: a product of Wako Pure Chemical Industries, Ltd.

Table 7 Compositions of Mid Layer and Cover

| (parts by weight) | | |
|---|---|---|
| | M | C |
| Surlyn 8945 | 55 | - |
| Himilan AM7329 | 45 | - |
| Rabalon T3221C | - | - |
| Elastollan NY82A | - | 100 |
| TINUVIN 770 | - | 0.2 |
| Titanium dioxide | 3 | 4 |
| Ultramarine blue | - | 0.04 |
| Hardness (Shore D) | 65 | 29 |

Table 8 Hardness Distribution of Core

| | Ex. 1 | Ex. 2 | Ex. 3 | Ex. 4 | Ex. 5 | Ex. 6 |
|---|---|---|---|---|---|---|
| H (0) | 62.0 | 62.0 | 62.0 | 62.0 | 62.0 | 62.0 |
| H (18) | 63.0 | 63.0 | 63.0 | 63.0 | 63.0 | 63.0 |
| H (36) | 63.5 | 63.5 | 63.5 | 63.5 | 63.5 | 63.5 |
| H (39) | 67.0 | 68.5 | 66.5 | 67.0 | 66.0 | 67.0 |
| H (51) | 71.0 | 71.5 | 70.0 | 71.0 | 70.0 | 71.0 |
| H (63) | 73.0 | 72.5 | 71.0 | 73.0 | 72.5 | 73.0 |
| H (75) | 75.0 | 74.0 | 73.0 | 74.5 | 75.0 | 75.0 |
| H (76) | 81.0 | 81.0 | 81.0 | 81.0 | 81.0 | 81.0 |
| H (84) | 82.5 | 82.5 | 82.5 | 82.5 | 82.5 | 82.5 |
| H (92) | 84.5 | 84.5 | 84.5 | 84.5 | 84.5 | 84.5 |
| H (100) | 87.5 | 87.5 | 87.5 | 87.5 | 87.5 | 87.5 |
| H (100) -H (0) | 25.5 | 25.5 | 25.5 | 25.5 | 25.5 | 25.5 |
| H (100) -H (36) | 24.0 | 24.0 | 24.0 | 24.0 | 24.0 | 24.0 |
| H (100) -H (39) | 20.5 | 19.0 | 21.0 | 20.5 | 21.5 | 20.5 |
| H (100) -H (75) | 12.5 | 13.5 | 14.5 | 13.0 | 12.5 | 12.5 |
| H (39) -H (36) | 3.5 | 5.0 | 3.0 | 3.5 | 2.5 | 3.5 |
| H (76) -H (75) | 6.0 | 7.0 | 8.0 | 6.5 | 6.0 | 6.0 |
| H(75)-H(39) | 8.0 | 5.5 | 6.5 | 7.5 | 9.0 | 8.0 |
| H (100) -H (76) | 6.5 | 6.5 | 6.5 | 6.5 | 6.5 | 6.5 |
| H2-H1 | 12.4 | 12.3 | 13.8 | 12.5 | 13.0 | 12.4 |

Table 9 Hardness Distribution of Core

| | Ex. 7 | Ex. 8 | Comp. Ex. 1 | Comp. Ex. 2 | Ex. 9 | Ex. 10 |
|---|---|---|---|---|---|---|
| H (0) | 62.0 | 62.0 | 62.0 | 62.0 | 62.0 | 62.0 |

(continued)

| | Ex. 7 | Ex. 8 | Comp. Ex. 1 | Comp. Ex. 2 | Ex. 9 | Ex. 10 |
|---|---|---|---|---|---|---|
| H (18) | 63.0 | 63.0 | 63.0 | 63.0 | 63.0 | 63.0 |
| H (36) | 63.5 | 63.5 | 63.5 | 63.5 | 63.5 | 63.5 |
| H (39) | 67.0 | 67.5 | 67.0 | 68.5 | 68.5 | 68.0 |
| H (51) | 71.0 | 71.5 | 68.5 | 72.0 | 72.0 | 71.0 |
| H (63) | 73.0 | 73.5 | 72.0 | 73.0 | 73.0 | 73.0 |
| H (75) | 75.0 | 75.5 | 81.0 | 74.0 | 74.0 | 74.0 |
| H (76) | 81.0 | 81.0 | 81.0 | 82.5 | 81.0 | 81.0 |
| H (84) | 82.5 | 82.5 | 83.5 | 83.5 | 82.5 | 82.5 |
| H (92) | 84.5 | 84.5 | 85.5 | 84.0 | 84.5 | 84.5 |
| H (100) | 87.5 | 87.5 | 87.5 | 86.0 | 87.5 | 87.5 |
| H (100) -H (0) | 25.5 | 25.5 | 25.5 | 24.0 | 25.5 | 25.5 |
| H (100) -H (36) | 24.0 | 24.0 | 24.0 | 22.5 | 24.0 | 24.0 |
| H (100) -H (39) | 20.5 | 20.0 | 20.5 | 17.5 | 19.0 | 19.5 |
| H (100) -H (75) | 12.5 | 12.0 | 6.5 | 12.0 | 13.5 | 13.5 |
| H (39) -H (36) | 3.5 | 4.0 | 3.5 | 5.0 | 5.0 | 4.5 |
| H (76) -H (75) | 6.0 | 5.5 | 0.0 | 8.5 | 7.0 | 7.0 |
| H (75) -H (39) | 8.0 | 8.0 | 14.0 | 5.5 | 5.5 | 6.0 |
| H (100) -H (76) | 6.5 | 6.5 | 6.5 | 3.5 | 6.5 | 6.5 |
| H2-H1 | 12.4 | 11.9 | 12.3 | 12.1 | 12.0 | 12.4 |

Table 10 Hardness Distribution of Core

| | Ex. 11 | Ex. 12 | Ex. 13 | Ex. 14 | Ex. 15 |
|---|---|---|---|---|---|
| H (0) | 62.0 | 62.0 | 62.0 | 62.0 | 62.0 |
| H (18) | 63.0 | 63.0 | 63.0 | 63.0 | 63.0 |
| H (36) | 63.5 | 63.5 | 63.5 | 63.5 | 63.5 |
| H (39) | 64.0 | 72.0 | 67.0 | 67.0 | 67.0 |
| H (51) | 67.0 | 76.0 | 71.0 | 71.0 | 71.0 |
| H (63) | 68.0 | 78.0 | 73.0 | 73.0 | 73.0 |
| H (75) | 69.5 | 80.0 | 75.0 | 75.0 | 75.0 |
| H (76) | 81.0 | 81.0 | 82.5 | 82.0 | 77.5 |
| H (84) | 82.5 | 82.5 | 83.5 | 83.5 | 78.2 |
| H (92) | 84.5 | 84.5 | 84.0 | 84.0 | 78.5 |
| H (100) | 87.5 | 87.5 | 86.0 | 86.0 | 79.0 |
| H (100) -H (0) | 25.5 | 25.5 | 24.0 | 24.0 | 17.0 |
| H (100) -H (36) | 24.0 | 24.0 | 22.5 | 22.5 | 15.5 |
| H (100) -H (39) | 23.5 | 15.5 | 19.0 | 19.0 | 12.0 |
| H(100)-H(75) | 18.0 | 7.5 | 11.0 | 11.0 | 4.0 |

(continued)

| | Ex. 11 | Ex. 12 | Ex. 13 | Ex. 14 | Ex. 15 |
|---|---|---|---|---|---|
| H(39)-H(36) | 0.5 | 8.5 | 3.5 | 3.5 | 3.5 |
| H(76)-H(75) | 11.5 | 1.0 | 7.5 | 7.0 | 2.5 |
| H (75) -H (39) | 5.5 | 8.0 | 8.0 | 8.0 | 8.0 |
| H (100) -H (76) | 6.5 | 6.5 | 3.5 | 4.0 | 1.5 |
| H2-H1 | 16.8 | 7.4 | 12.5 | 12.4 | 6.8 |

Table 11 Hardness Distribution of Core

| | Ex. 16 | Ex. 17 |
|---|---|---|
| H (0) | 62.0 | 62.0 |
| H (18) | 63.0 | 63.0 |
| H (36) | 63.5 | 63.5 |
| H (39) | 64.0 | 71.0 |
| H (51) | 68.0 | 75.0 |
| H (63) | 70.0 | 77.0 |
| H (75) | 72.0 | 79.0 |
| H (76) | 81.0 | 80.0 |
| H (84) | 82.5 | 82.5 |
| H (92) | 84.5 | 84.5 |
| H (100) | 87.5 | 87.5 |
| H (100) -H (0) | 25.5 | 25.5 |
| H (100) -H (36) | 24.0 | 24.0 |
| H (100) -H (39) | 23.5 | 16.5 |
| H (100) -H (75) | 15.5 | 8.5 |
| H(39)-H(36) | 0.5 | 7.5 |
| H(76)-H(75) | 9.0 | 1.0 |
| H (75) -H (39) | 8.0 | 8.0 |
| H (100) -H (76) | 6.5 | 7.5 |
| H2-H1 | 15.4 | 8.1 |

Table 12 Results of Evaluation

| | Ex. 1 | Ex. 2 | Ex. 3 | Ex. 4 | Ex. 5 | Ex. 6 |
|---|---|---|---|---|---|---|
| Center | | | | | | |
| Composition | F1 | F1 | F1 | F1 | F1 | F1 |
| Acid and/or salt (phr) | 0.0 | 0.0 | 0.0 | 0.0 | 0.0 | 0.0 |
| Diameter (mm) | 15.0 | 15.0 | 15.0 | 15.0 | 15.0 | 15.0 |
| First envelope layer | | | | | | |
| Composition | S1 | S2 | S3 | S4 | S5 | S6 |

(continued)

| | Ex. 1 | Ex. 2 | Ex. 3 | Ex. 4 | Ex. 5 | Ex. 6 |
|---|---|---|---|---|---|---|
| Acid and/or salt (phr) | 5.0 | 2.0 | 12.0 | 5.0 | 5.0 | 5.0 |
| Diameter (mm) | 30.0 | 30.0 | 30.0 | 30.0 | 30.0 | 30.0 |
| $R^2$ | 0.97 | 0.95 | 0.95 | 0.95 | 0.98 | 0.97 |
| Gradient $\alpha 1$ | 1.04 | 0.70 | 0.82 | 0.98 | 1.18 | 1.04 |
| Second envelop layer | | | | | | |
| Composition | F2 | F2 | F2 | F2 | F2 | F2 |
| Acid and/or salt (phr) | 5.0 | 5.0 | 5.0 | 5.0 | 5.0 | 5.0 |
| Diameter(mm) | 39.7 | 39.7 | 39.7 | 39.7 | 39.7 | 39.7 |
| $R^2$ | 0.98 | 0.98 | 0.98 | 0.98 | 0.98 | 0.98 |
| Gradient $\alpha 2$ | 1.33 | 1.33 | 1.33 | 1.33 | 1.33 | 1.33 |
| Mid layer | | | | | | |
| Composition | M | M | M | M | M | M |
| Hardness Hm (Shore D) | 65.0 | 65.0 | 65.0 | 65.0 | 65.0 | 65.0 |
| Thickness Tm (mm) | 1.0 | 1.0 | 1.0 | 1.0 | 1.0 | 1.0 |
| Cover | | | | | | |
| Composition | C | C | C | C | C | C |
| Hardness Hc (Shore D) | 29.0 | 29.0 | 29.0 | 29.0 | 29.0 | 29.0 |
| Thickness Tc (mm) | 0.5 | 0.5 | 0.5 | 0.5 | 0.5 | 0.5 |
| Ball | | | | | | |
| Hm-Hc | 36.0 | 36.0 | 36.0 | 36.0 | 36.0 | 36.0 |
| Deformation amount Db(mm) | 2.6 | 2.6 | 2.6 | 2.6 | 2.6 | 2.6 |
| W#1 spin rate (rpm) | 2800 | 2900 | 2700 | 2800 | 2750 | 2800 |
| W#1 flight distance (m) | 246 | 244 | 248 | 246 | 247 | 246 |

Table 13 Results of Evaluation

| | Ex. 7 | Ex. 8 | Comp. Ex. 1 | Comp. Ex. 2 | Ex. 9 | Ex. 10 |
|---|---|---|---|---|---|---|
| Center | | | | | | |
| Composition | F1 | F1 | F1 | F1 | F1 | F1 |
| Acid and/or salt (phr) | 0.0 | 0.0 | 0.0 | 0.0 | 0.0 | 0.0 |
| Diameter (mm) | 15.0 | 15.0 | 15.0 | 15.0 | 15.0 | 15.0 |
| First envelope layer | | | | | | |
| Composition | S7 | S8 | - | S9 | S9 | S10 |
| Acid and/or salt (phr) | 7.5 | 5.0 | - | 0.0 | 0.0 | 0.5 |
| Diameter (mm) | 30.0 | 30.0 | - | 30.0 | 30.0 | 30.0 |
| $R^2$ | 0.97 | 0.97 | - | 0.89 | 0.89 | 0.95 |
| Gradient $\alpha 1$ | 1.04 | 1.04 | - | 0.73 | 0.73 | 0.80 |
| Second envelop layer | | | | | | |

(continued)

| | Ex. 7 | Ex. 8 | Comp. Ex. 1 | Comp. Ex. 2 | Ex. 9 | Ex. 10 |
|---|---|---|---|---|---|---|
| Composition | F2 | F2 | - | F3 | F2 | F2 |
| Acid and/or salt (phr) | 5.0 | 5.0 | - | 0.0 | 5.0 | 5.0 |
| Diameter (mm) | 39.7 | 39.7 | - | 39.7 | 39.7 | 39.7 |
| $R^2$ | 0.98 | 0.98 | - | 0.93 | 0.98 | 0.98 |
| Gradient $\alpha 2$ | 1.33 | 1.33 | - | 0.68 | 1.33 | 1.33 |
| Mid layer | | | | | | |
| Composition | M | M | M | M | M | M |
| Hardness Hm (Shore D) | 65.0 | 65.0 | 65.0 | 65.0 | 65.0 | 65.0 |
| Thickness Tm (mm) | 1.0 | 1.0 | 1.0 | 1.0 | 1.0 | 1.0 |
| Cover | | | | | | |
| Composition | C | C | C | C | C | C |
| Hardness Hc (Shore D) | 29.0 | 29.0 | 29.0 | 29.0 | 29.0 | 29.0 |
| Thickness Tc (mm) | 0.5 | 0.5 | 0.5 | 0.5 | 0.5 | 0.5 |
| Ball | | | | | | |
| Hm-Hc | 36.0 | 36.0 | 36.0 | 36.0 | 36.0 | 36.0 |
| Deformation amount Db (mm) | 2.6 | 2.6 | 2.6 | 2.6 | 2.6 | 2.6 |
| W#1 spin rate (rpm) | 2800 | 2900 | 3000 | 3100 | 2950 | 2950 |
| W#1 flight distance (m) | 246 | 244 | 241 | 240 | 243 | 243 |

Table 14 Results of Evaluation

| | Ex. 11 | Ex. 12 | Ex. 13 | Ex. 14 | Ex. 15 |
|---|---|---|---|---|---|
| Center | | | | | |
| Composition | F1 | F1 | F1 | F1 | F1 |
| Acid and/or salt (phr) | 0.0 | 0.0 | 0.0 | 0.0 | 0.0 |
| Diameter (mm) | 15.0 | 15.0 | 15.0 | 15.0 | 15.0 |
| First envelope layer | | | | | |
| Composition | S11 | S13 | S1 | S1 | S1 |
| Acid and/or salt (phr) | 45.0 | 5.0 | 5.0 | 5.0 | 5.0 |
| Diameter (mm) | 30.0 | 30.0 | 30.0 | 30.0 | 30.0 |
| $R^2$ | 0.95 | 0.97 | 0.97 | 0.97 | 0.97 |
| Gradient $\alpha 1$ | 0.70 | 1.04 | 1.04 | 1.04 | 1.04 |
| Second envelop layer | | | | | |
| Composition | F2 | F2 | F3 | F4 | F5 |
| Acid and/or salt (phr) | 5.0 | 5.0 | 0.0 | 0.5 | 45.0 |
| Diameter (mm) | 39.7 | 39.7 | 39.7 | 39.7 | 39.7 |
| $R^2$ | 0.98 | 0.98 | 0.93 | 0.95 | 0.98 |
| Gradient $\alpha 2$ | 1.33 | 1.33 | 0.68 | 0.77 | 0.30 |

(continued)

| | Ex. 11 | Ex. 12 | Ex. 13 | Ex. 14 | Ex. 15 |
|---|---|---|---|---|---|
| Mid layer | | | | | |
| Composition | M | M | M | M | M |
| Hardness Hm (Shore D) | 65.0 | 65.0 | 65.0 | 65.0 | 65.0 |
| Thickness Tm (mm) | 1.0 | 1.0 | 1.0 | 1.0 | 1.0 |
| Cover | | | | | |
| Composition | C | C | C | C | C |
| Hardness Hc (Shore D) | 29.0 | 29.0 | 29.0 | 29.0 | 29.0 |
| Thickness Tc (mm) | 0.5 | 0.5 | 0.5 | 0.5 | 0.5 |
| Ball | | | | | |
| Hm-Hc | 36.0 | 36.0 | 36.0 | 36.0 | 36.0 |
| Deformation amount Db (mm) | 2.6 | 2.6 | 2.6 | 2.6 | 2.6 |
| W#1 spin rate (rpm) | 2700 | 2970 | 2950 | 2950 | 2980 |
| W#1 flight distance (m) | 248 | 242 | 243 | 243 | 242 |

Table 15 Results of Evaluation

| | Ex. 16 | Ex. 17 |
|---|---|---|
| Center | | |
| Composition | F1 | F1 |
| Acid and/or salt (phr) | 0.0 | 0.0 |
| Diameter (mm) | 15.0 | 15.0 |
| First envelope layer | | |
| Composition | S14 | S15 |
| Acid and/or salt (phr) | 5.0 | 5.0 |
| Diameter (mm) | 30.0 | 30.0 |
| $R^2$ | 0.97 | 0.97 |
| Gradient $\alpha 1$ | 1.04 | 1.04 |
| Second envelop layer | | |
| Composition | F2 | F2 |
| Acid and/or salt (phr) | 5.0 | 5.0 |
| Diameter (mm) | 39.7 | 39.7 |
| $R^2$ | 0.98 | 0.98 |
| Gradient $\alpha 2$ | 1.33 | 1.33 |
| Mid layer | | |
| Composition | M | M |
| Hardness Hm (Shore D) | 65.0 | 65.0 |
| Thickness Tm (mm) | 1.0 | 1.0 |
| Cover | | |

(continued)

| | Ex. 16 | Ex. 17 |
|---|---|---|
| Composition | C | C |
| Hardness Hc (Shore D) | 29.0 | 29.0 |
| Thickness Tc (mm) | 0.5 | 0.5 |
| Ball | | |
| Hm-Hc | 36.0 | 36.0 |
| Deformation amount Db (mm) | 2.6 | 2.6 |
| W#1 spin rate (rpm) | 2750 | 2950 |
| W#1 flight distance (m) | 247 | 243 |

As shown in Tables 12 to 15, the golf balls according to Examples are excellent in various performance characteristics. From the results of evaluation, advantages of the present invention are clear.

The golf ball according to the present invention can be used for playing golf on golf courses and practicing at driving ranges. The above descriptions are merely for illustrative examples, and various modifications can be made without departing from the principles of the present invention.

## Claims

1. A golf ball comprising a core, a mid layer positioned outside the core, and a cover positioned outside the mid layer, wherein
the core comprises a center, a first envelope layer positioned outside the center, and a second envelope layer positioned outside the first envelope layer,
the first envelope layer is formed by a first rubber composition being crosslinked,
the second envelope layer is formed by a second rubber composition being crosslinked,
the first rubber composition and/or the second rubber composition include:

   (a) a base rubber;
   (b) a co-crosslinking agent;
   (c) a crosslinking initiator; and
   (d) an acid and/or a salt, and

   the co-crosslinking agent (b) is:

   (b-1) an $\alpha,\beta$-unsaturated carboxylic acid having 3 to 8 carbon atoms; and/or
   (b-2) a metal salt of an $\alpha,\beta$-unsaturated carboxylic acid having 3 to 8 carbon atoms

   wherein the JIS-C hardness H(100) at a surface of the core is greater than the JIS-C hardness H (75) at a point whose ratio of a distance from a central point of the core to a radius of the core is 75%.

2. The golf ball according to claim 1, wherein an amount of the acid and/or the salt (d) is equal to or greater than 0.5 parts by weight but equal to or less than 45 parts by weight, per 100 parts by weight of the base rubber (a).

3. The golf ball according to claim 1, wherein the acid and/or the salt (d) is a carboxylic acid and/or a salt thereof (d-1).

4. The golf ball according to claim 3, wherein a carbon number of a carboxylic acid component of the carboxylic acid and/or the salt thereof (d-1) is equal to or greater than 1 but equal to or less than 30.

5. The golf ball according to claim 3, wherein the carboxylic acid and/or the salt thereof (d-1) is a fatty acid and/or a salt thereof.

6. The golf ball according to claim 3, wherein the carboxylic acid and/or the salt thereof (d-1) is a zinc salt of a carboxylic

acid.

7. The golf ball according to claim 6, wherein the zinc salt of the carboxylic acid is one or more members selected from the group consisting of zinc octoate, zinc laurate, zinc myristate, and zinc stearate.

8. The golf ball according to claim 1, wherein the first rubber composition and/or the second rubber composition further include an organic sulfur compound (e).

9. The golf ball according to claim 8, wherein the organic sulfur compound (e) is at least one member selected from the group consisting of thiophenols, diphenyl disulfides, thionaphthols, thiuram disulfides, and metal salts thereof.

10. The golf ball according to claim 8, wherein the organic sulfur compound (e) is one or more members selected from the group consisting of 2-thionaphthol, bis(pentabromophenyl)disulfide, and 2,6-dichlorothiophenol.

11. The golf ball according to claim 8, wherein an amount of the organic sulfur compound (e) is equal to or greater than 0.05 parts by weight but equal to or less than 5.0 parts by weight, per 100 parts by weight of the base rubber (a).

12. The golf ball according to claim 1, wherein an amount of the co-crosslinking agent (b) is equal to or greater than 15 parts by weight but equal to or less than 50 parts by weight, per 100 parts by weight of the base rubber (a).

13. The golf ball according to claim 1, wherein an amount of the crosslinking initiator (c) is equal to or greater than 0.2 parts by weight but equal to or less than 5.0 parts by weight, per 100 parts by weight of the base rubber (a).

14. The golf ball according to claim 1, wherein
the first rubber composition and/or the second rubber composition include the $\alpha,\beta$-unsaturated carboxylic acid (b-1), and
the first rubber composition and/or the second rubber composition further include a metal compound (f).

15. The golf ball according to claim 1, wherein
a JIS-C hardness H(0) at a central point of the core is equal to or greater than 40 but equal to or less than 70, and
a JIS-C hardness H(100) at a surface of the core is equal to or greater than 78 but equal to or less than 96.

16. The golf ball according to claim 15, wherein a difference (H(100)-H(0)) between the hardness H (100) and the hardness H(0) is equal to or greater than 15.

17. The golf ball according to claim 1, wherein a Shore D hardness Hm of the mid layer is greater than a Shore D hardness Hc of the cover.

18. The golf ball according to claim 17, wherein a difference (Hm-Hc) between the hardness Hm and the hardness Hc is equal to or greater than 18.

19. The golf ball according to claim 1, wherein a JIS-C hardness H (39) at a point whose ratio of a distance from a central point of the core to a radius of the core is 39% is greater than a JIS-C hardness H(36) at a point whose ratio of a distance from the central point of the core to the radius of the core is 36%.

20. The golf ball according to claim 1, wherein a JIS-C hardness H (76) at a point whose ratio of a distance from a central point of the core to a radius of the core is 76% is greater than a JIS-C hardness H(75) at a point whose ratio of a distance from the central point of the core to the radius of the core is 75%.

21. The golf ball according to claim 1, wherein a difference (H(100)-H(75)) between the hardness H (100) and the hardness H (75) is equal to or greater than 4.

22. The golf ball according to claim 1, wherein
the mid layer is formed from a resin composition,
the cover is formed from a resin composition whose base resin is different from a base resin of the mid layer, and
the golf ball further comprises a reinforcing layer between the mid layer and the cover.

23. The golf ball according to claim 1, wherein a diameter of the center is equal to or greater than 10 mm but equal to

or less than 20 mm.

**Patentansprüche**

1. Golfball umfassend einen Kern, eine Mittelschicht, die außerhalb des Kerns angeordnet ist, und eine Abdeckung, die außerhalb der Mittelschicht angeordnet ist, wobei

   der Kern ein Zentrum, eine erste Hüllschicht, die außerhalb des Zentrums angeordnet ist, und eine zweite Hüllschicht, die außerhalb der ersten Hüllschicht angeordnet ist, umfasst,
   die erste Hüllschicht durch eine vernetzte erste Kautschukzusammensetzung gebildet ist,
   die zweite Hüllschicht durch eine zweite vernetzte Kautschukzusammensetzung gebildet ist,
   die erste Kautschukzusammensetzung und/oder die zweite Kautschukzusammensetzung umfassen:

   (a) einen Basiskautschuk,
   (b) ein Co-Vernetzungsmittel,
   (c) einen Vernetzungsinitiator, und
   (d) eine Säure und/oder ein Salz, und

   das Co-Vernetzungsmittel (b) ist:

   (b-1) eine $\alpha,\beta$-ungesättigte Carbonsäure mit 3 bis 8 Kohlenstoffatomen; und
   (b-2) ein Metallsalz einer $\alpha,\beta$-ungesättigten Carbonsäure mit 3 bis 8 Kohlenstoffatomen,

   wobei die JIS-C-Härte H(100) an einer Oberfläche des Kerns größer als die JIS-C-Härte H(75) an einem Punkt ist, dessen Verhältnis eines Abstandes von einem zentralen Punkt des Kerns zu einem Radius des Kerns 75% beträgt.

2. Golfball nach Anspruch 1, wobei eine Menge der Säure und/oder des Salzes (d) gleich oder größer 0,5 Gewichtsteile, aber gleich oder kleiner als 45 Gewichtsteile bezogen auf 100 Gewichtsteile des Basiskautschuks (a) ist.

3. Golfball nach Anspruch 1, wobei die Säure und/oder das Salz (d) eine Carbonsäure und/oder ein Salz davon (d-1) ist.

4. Golfball nach Anspruch 3, wobei eine Kohlenstoffzahl einer Carbonsäurekomponente der Carbonsäure und/oder des Salzes davon (d-1) gleich oder größer als 1, aber gleich oder kleiner als 30 ist.

5. Golfball nach Anspruch 3, wobei die Carbonsäure und/oder das Salz davon (d-1) eine Fettsäure und/oder ein Salz davon ist.

6. Golfball nach Anspruch 3, wobei die Carbonsäure und/oder das Salz davon (d-1) ein Zinksalz einer Carbonsäure ist.

7. Golfball nach Anspruch 6, wobei das Zinksalz der Carbonsäure ein oder mehrere Mitglieder sind, die aus der Gruppe ausgewählt sind, die aus Zinkoctoat, Zinklaurat, Zinkmyristat und Zinkstearat besteht.

8. Golfball nach Anspruch 1, wobei die erste Kautschukzusammensetzung und/oder die zweite Kautschukzusammensetzung ferner eine organische Schwefelverbindung (e) umfasst/umfassen.

9. Golfball nach Anspruch 8, wobei die organische Schwefelverbindung (e) zumindest ein Mitglied ist, das aus der Gruppe ausgewählt ist, die aus Thiophenolen, Diphenyldisulfiden, Thionaphtholen, Thiuramdisulfiden und Metallsalzen davon besteht.

10. Golfball nach Anspruch 8, wobei die organische Schwefelverbindung (e) ein oder mehrere Mitglieder ist, die aus der Gruppe ausgewählt sind, die aus 2-Thionaphthol, Bis(pentabromphenyl)disulfid und 2,6-Dichlorthiophenol besteht.

11. Golfball nach Anspruch 8, wobei eine Menge der organischen Schwefelverbindung (e) gleich oder größer als 0,05 Gewichtsteile, aber gleich oder kleiner als 5,0 Gewichtsteile bezogen auf 100 Gewichtsteile des Basiskautschuks (a) ist.

**12.** Golfball nach Anspruch 1, wobei eine Menge des Co-Vernetzungsmittels (b) gleich oder größer als 15 Gewichtsteile, aber gleich oder kleiner als 50 Gewichtsteile bezogen auf 100 Gewichtsteile des Basiskautschuks (a) ist.

**13.** Golfball nach Anspruch 1, wobei eine Menge des Co-Vernetzungsinitiators (c) gleich oder größer als 0,2 Gewichtsteile, aber gleich oder kleiner als 5,0 Gewichtsteile bezogen auf 100 Gewichtsteile des Basiskautschuks (a) ist.

**14.** Golfball nach Anspruch 1, wobei

die erste Kautschukzusammensetzung und/oder die zweite Kautschukzusammensetzung die $\alpha,\beta$-ungesättigte Carbonsäure (b-1) umfasst/umfassen, und
die erste Kautschukzusammensetzung und/oder die zweite Kautschukzusammensetzung darüber hinaus eine Metallverbindung (f) umfasst/umfassen.

**15.** Golfball nach Anspruch 1, wobei

eine JIS-C-Härte H(0) an einem zentralen Punkt des Kerns gleich oder größer als 40, aber gleich oder kleiner als 70 ist, und
eine JIS-C-Härte H(100) an einer Oberfläche des Kerns gleich oder größer als 78, aber gleich oder kleiner als 96 ist.

**16.** Golfball nach Anspruch 15, wobei eine Differenz (H(100)-H(0)) zwischen der Härte H(100) und der Härte H(0) gleich oder größer als 15 ist.

**17.** Golfball nach Anspruch 1, wobei eine Shore-D-Härte Hm der Mittelschicht größer als eine Shore-D-Härte Hc der Abdeckung ist.

**18.** Golfball nach Anspruch 17, wobei eine Differenz (Hm-Hc) zwischen der Härte Hm und der Härte Hc gleich oder größer als 18 ist.

**19.** Golfball nach Anspruch 1, wobei eine JIS-C-Härte H(39) an einem Punkt, dessen Verhältnis eines Abstandes von einem zentralen Punkt des Kerns zu einem Radius des Kerns 39% beträgt, größer als eine JIS-C-Härte H(36) an einem Punkt ist, dessen Verhältnis eines Abstandes von dem zentralen Punkt des Kerns zu dem Radius des Kerns 36% beträgt.

**20.** Golfball nach Anspruch 1, wobei eine JIS-C-Härte H(76) an einem Punkt, dessen Verhältnis eines Abstandes von einem zentralen Punkt des Kerns zu einem Radius des Kerns 76% beträgt, größer als eine JIS-C-Härte H(75) an einem Punkt ist, dessen Verhältnis eines Abstandes von dem zentralen Punkt des Kerns zu dem Radius des Kerns 75% beträgt.

**21.** Golfball nach Anspruch 1, wobei eine Differenz (H(100)-H(75)) zwischen der Härte H(100) und der Härte H(75) gleich oder größer als 4 ist.

**22.** Golfball nach Anspruch 1, wobei

die Mittelschicht aus einer Harzverbindung gebildet ist,
die Abdeckung aus einer Harzverbindung gebildet ist, deren Basisharz sich von einem Basisharz der Mittelschicht unterscheidet, und
der Golfball darüber hinaus eine Verstärkungsschicht zwischen der Mittelschicht und der Abdeckung umfasst.

**23.** Golfball nach Anspruch 1, wobei ein Durchmesser des Zentrums gleich oder größer als 10 mm, aber gleich oder kleiner als 20 mm ist.

## Revendications

**1.** Balle de golf comprenant un noyau, une couche médiane positionnée à l'extérieur du noyau, et une couverture positionnée à l'extérieur de la couche médiane, dans laquelle
le noyau comprend un centre, une première couche enveloppe positionnée à l'extérieur du centre, et une seconde

couche enveloppe positionnée à l'extérieur de la première couche enveloppe,
la première couche enveloppe est formée d'une première composition à base de caoutchouc qui est réticulée,
la seconde couche enveloppe est formée d'une seconde composition à base de caoutchouc qui est réticulée,
la première composition à base de caoutchouc et/ou la seconde composition à base de caoutchouc inclut :

(a) un caoutchouc de base ;
(b) un agent de co-réticulation ;
(c) un initiateur de réticulation ; et
(d) un acide et/ou un sel, et

l'agent de co-réticulation (b) est :

(b-1) un acide carboxylique insaturé-$\alpha,\beta$ ayant 3 à 8 atomes de carbone ; et/ou
(b-2) un sel métallique d'un acide carboxylique insaturé-$\alpha,\beta$ ayant 3 à 8 atomes de carbone,

dans laquelle la dureté JIS-C H(100) à une surface du noyau est plus élevée que la dureté JIS-C H(75) à un point auquel le rapport d'une distance depuis un point central du noyau sur un rayon du noyau est de 75 %.

**2.** Balle de golf selon la revendication 1, dans laquelle une quantité de l'acide et/ou du sel (d) est égale ou supérieure à 0,5 parties en poids, mais égale ou inférieure à 45 parties en poids, pour 100 parties en poids du caoutchouc de base (a).

**3.** Balle de golf selon la revendication 1, dans laquelle l'acide et/ou le sel (d) est un acide carboxylique et/ou un sel de celui-ci (d-1).

**4.** Balle de golf selon la revendication 3, dans laquelle un nombre d'atomes de carbone d'une composante acide carboxylique de l'acide carboxylique et/ou le sel de celui-ci (d-1) est égal ou supérieur à 1 mais égal ou inférieur à 30.

**5.** Balle de golf selon la revendication 3, dans laquelle l'acide carboxylique et/ou le sel de celui-ci (d-1) est un acide gras et/ou un sel de celui-ci.

**6.** Balle de golf selon la revendication 3, dans laquelle l'acide carboxylique et/ou le sel de celui-ci (d-1) est un sel de zinc d'un acide carboxylique.

**7.** Balle de golf selon la revendication 6, dans laquelle le sel de zinc d'acide carboxylique est un ou plusieurs éléments sélectionnés parmi le groupe comprenant octoate de zinc, laurate de zinc, myristate de zinc et stéarate de zinc.

**8.** Balle de golf selon la revendication 1, dans laquelle la première composition à base de caoutchouc et/ou la seconde composition à base de caoutchouc inclut en outre un composé sulfuré organique (e).

**9.** Balle de golf selon la revendication 8, dans laquelle le composé sulfuré organique (e) est au moins un élément sélectionné parmi le groupe comprenant les thiophénols, les disulfides de diphényl, les thionaphthols, les disulfides de thiuram, et les sels métalliques de ceux-ci.

**10.** Balle de golf selon la revendication 8, dans laquelle le composé sulfuré organique (e) est un ou plusieurs éléments sélectionnés parmi le groupe comprenant 2-thionaphthol, bis(pentabromophényle)disulfides, et 2,6-dichlorothiophénols.

**11.** Balle de golf selon la revendication 8, dans laquelle une quantité du composé sulfuré organique (e) est égale ou supérieure à 0,05 parties en poids, mais égale ou inférieure à 5,0 parties en poids, pour 100 parties en poids du caoutchouc de base (a).

**12.** Balle de golf selon la revendication 1, dans laquelle une quantité de l'agent de co-réticulation (b) est égale ou supérieure à 15 parties en poids, mais égale ou inférieure à 50 parties en poids, pour 100 parties en poids du caoutchouc de base (a).

**13.** Balle de golf selon la revendication 1, dans laquelle une quantité de l'initiateur de réticulation (c) est égale ou supérieure à 0,2 parties en poids, mais égale ou inférieure à 5,0 partie en poids, pour 100 parties en poids du

caoutchouc de base (a).

**14.** Balle de golf selon la revendication 1, dans laquelle la première composition à base de caoutchouc et/ou la seconde composition à base de caoutchouc inclut de l'acide carboxylique insaturé-$\alpha,\beta$ (b-1) et
la première composition à base de caoutchouc et/ou la seconde composition à base de caoutchouc inclut en outre un composé métallique (f).

**15.** Balle de golf selon la revendication 1, dans laquelle une dureté JIS-C H(0) à un point central du noyau est égale ou supérieure à 40 mais égale ou inférieure à 70, et
une dureté JIS-C H(100) à une surface du noyau est égale ou supérieure à 78, mais égale ou inférieure à 96.

**16.** Balle de golf selon la revendication 15, dans laquelle une différence (H(100) - H(0)) entre la dureté H(100) et la dureté H(0) est égale ou supérieure à 15.

**17.** Balle de golf selon la revendication 1, dans laquelle une dureté Shore D Hm de la couche médiane est supérieure à une dureté Shore D Hc de la couverture.

**18.** Balle de golf selon la revendication 17, dans laquelle une différence (Hm - Hc) entre la dureté Hm et la dureté Hc est égale ou supérieure à 18.

**19.** Balle de golf selon la revendication 1, dans laquelle une dureté JIS-C H(39) à un point dont le rapport de la distance depuis un point central du noyau sur un rayon du noyau est 39 %, est plus élevée qu'une dureté JIS-C H(36) à un point dont le rapport de la distance depuis le point central du noyau sur le rayon du noyau est 36 %.

**20.** Balle de golf selon la revendication 1, dans laquelle une dureté JIS-C H (76) à un point dont le rapport de la distance depuis un point central du noyau sur un rayon du noyau est 76 %, est plus élevée qu'une dureté JIS-C H(75) à un point dont le rapport de la distance depuis le point central du noyau sur le rayon du noyau est 75 %.

**21.** Balle de golf selon la revendication 1, dans laquelle une différence (H(100) - H(75)) entre la dureté H(100) et la dureté H(75) est égale ou supérieure à 4.

**22.** Balle de golf selon la revendication 1, dans laquelle la couche médiane est formée d'une composition à base de résine, la couverture est formée d'une composition à base de résine dont la résine de base est différente d'une résine de base de la couche médiane, et
la balle de golf comprend en outre une couche de renforcement entre la couche médiane et la couverture.

**23.** Balle de golf selon la revendication 1, dans laquelle un diamètre du centre est égal ou supérieur à 10 mm, mais égal ou inférieur à 20 mm.

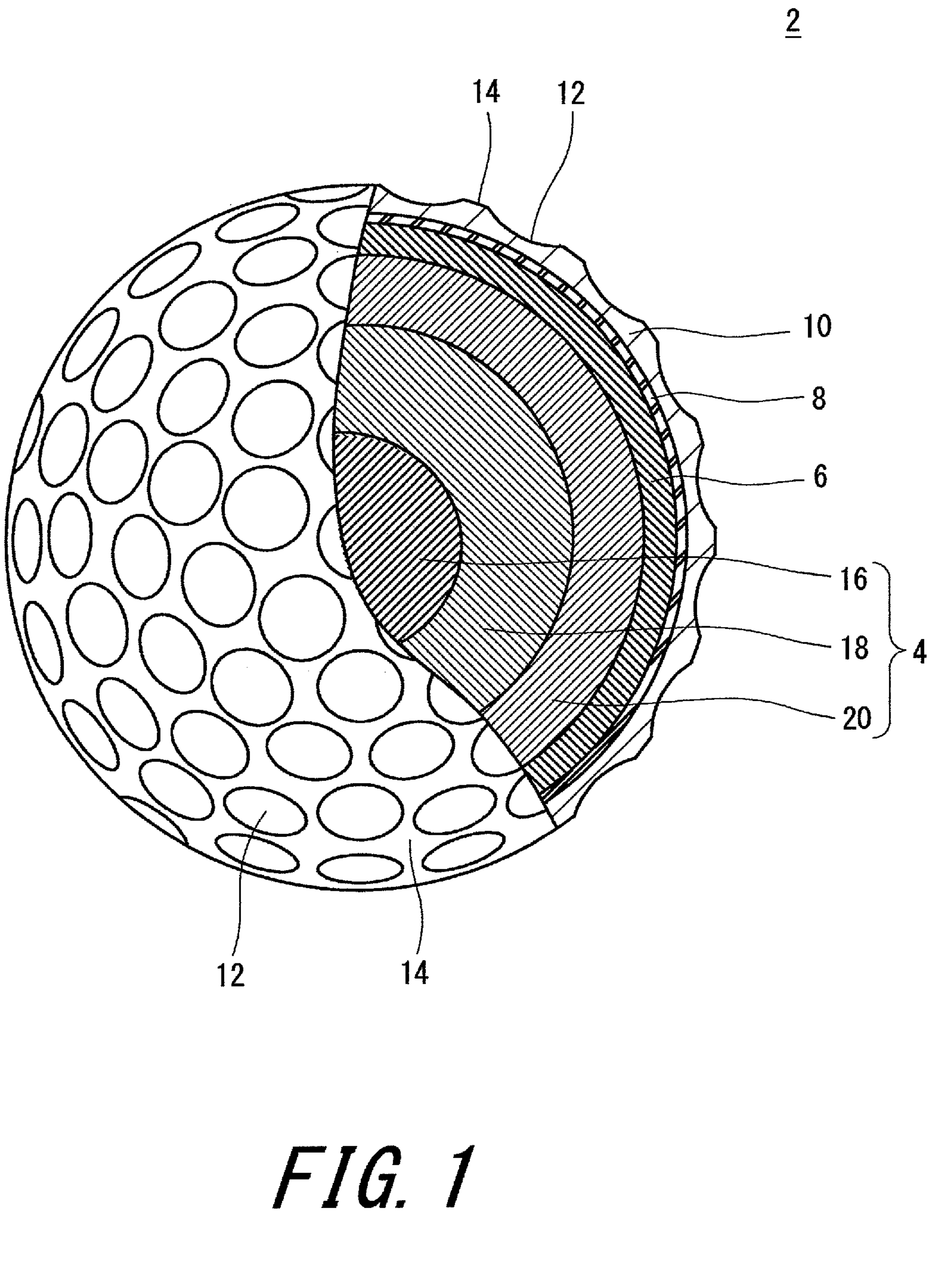


FIG. 1

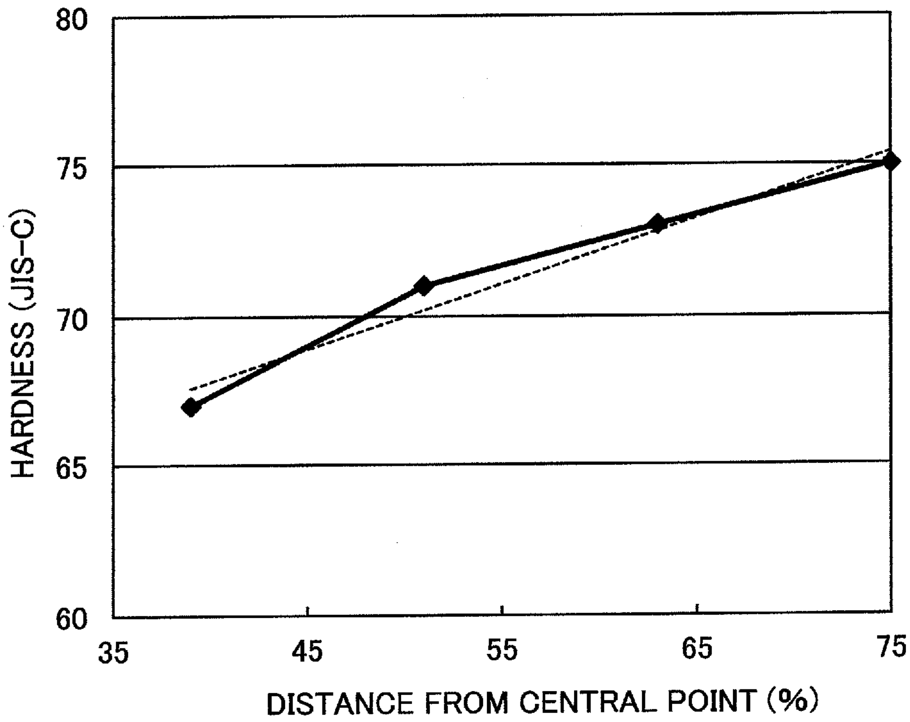
80
75
70
65
60
HARDNESS (JIS-C)
35
45
55
65
75
DISTANCE FROM CENTRAL POINT (%)

FIG. 2

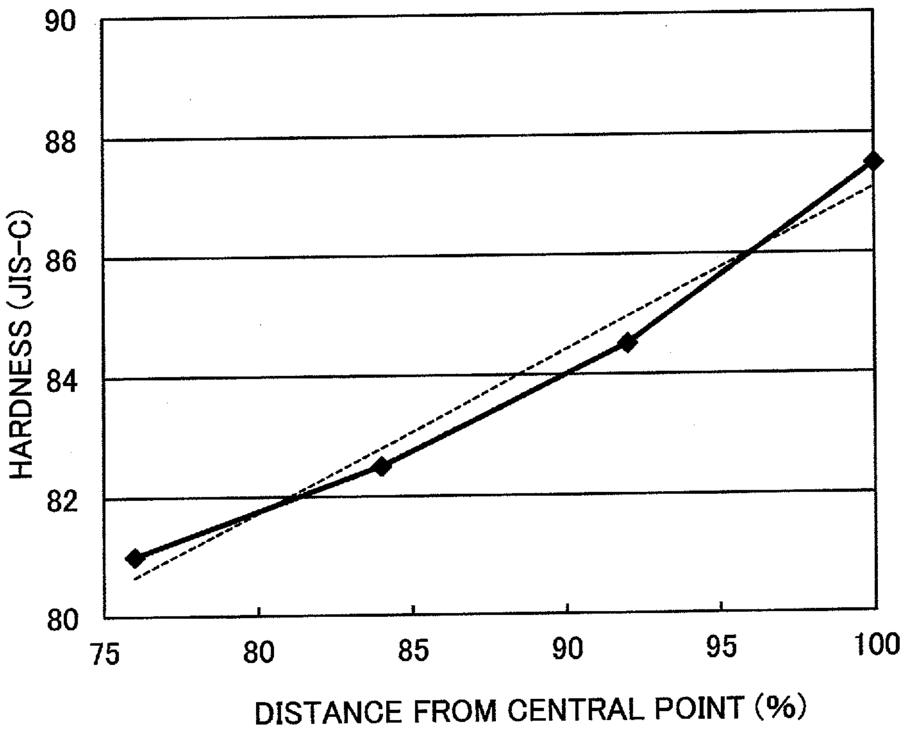
90
88
86
84
82
80
HARDNESS (JIS-C)
75
80
85
90
95
100
DISTANCE FROM CENTRAL POINT (%)

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012124406 A
- JP 61037178 A
- JP 2008212681 A
- US 20080214324 A
- JP 2008523952 A
- US 20060135287 A
- US 20070173607 A
- JP 2009119256 A
- US 20090124757 A
- JP 6154357 A
- US P5403010 A
- JP 2008194471 A
- US P7344455 B
- US 20080194358 A
- US 20080194359 A
- US 20080214325 A
- JP 2008194473 A
- US 20080194357 A
- US 20080312008 A
- JP 2010253268 A
- US 20100273575 A
- EP 2537888 A2
- EP 1068883 A2